# EUROPEAN PATENT SPECIFICATION

(11) **EP 3 264 881 B1**
(45) Date of publication and mention of the grant of the patent: **12.06.2019**
(21) Application number: 16718497.7
(22) Date of filing: 26.02.2016
(51) Int. Cl.: A01F 15/07

(54) **APPARATUS AND METHOD FOR FORMING AND WRAPPING A BALE IN A BALE FORMING CHAMBER**
VORRICHTUNG UND VERFAHREN ZUR FORMEN UND UMWICKLUNG EINES BALLENS IN EINER BALLENFORMUNGSKAMMER
APPAREIL ET PROCÉDÉ DE FORMATION ET DE RECOUVREMENT D'UNE BALLE DANS UNE CHAMBRE DE FORMATION DE BALLES

(30) Priority: 04.03.2015 NL 2014394
(43) Date of publication of application: 10.01.2018
(73) Proprietor: Forage Company B.V., 3147 PB Maassluis (NL)
(72) Inventor: REIJERSEN VAN BUUREN, Willem Jacobus, 3147 PB Maassluis (NL); DE JONG, Rudy, 3147 PB Maassluis (NL)
(74) Representative: AGCO Intellectual Property Department
(86) International application number: PCT/NL2016/050136
(87) International publication number: WO 2016/140568

(56) References cited:
- EP-A1- 2 664 230
- EP-A1- 2 777 382
- US-A- 5 129 207
- US-A- 5 129 208
- US-A1- 2002 121 200

## Description

### FIELD OF THE INVENTION

The invention refers to an apparatus and a method for forming a bale in a bale forming chamber and for wrapping the bale in the bale forming chamber into wrapping material. The invention can in particular be used in an agricultural baler which moves over ground, picks-up loose crop material from the ground, forms a round-cylindrical or cuboid bale from the picked-up crop material, wraps this bale, and deposits the wrapped bale on the ground.

### BACKGROUND OF THE INVENTION

A round baler (bale forming apparatus) as used for agricultural or recycling purposes feeds loose material into a bale forming chamber, forms under pressure from this loose material in the bale forming chamber a round-cylindrical bale, rotates the increasing bale, wraps the created bale in the bale forming chamber into wrapping material, ejects the wrapped bale out of the bale forming chamber, and deposits the ejected wrapped bale on the ground. A bale forming means partially surrounds the bale forming chamber. A casing surrounds the bale forming means.

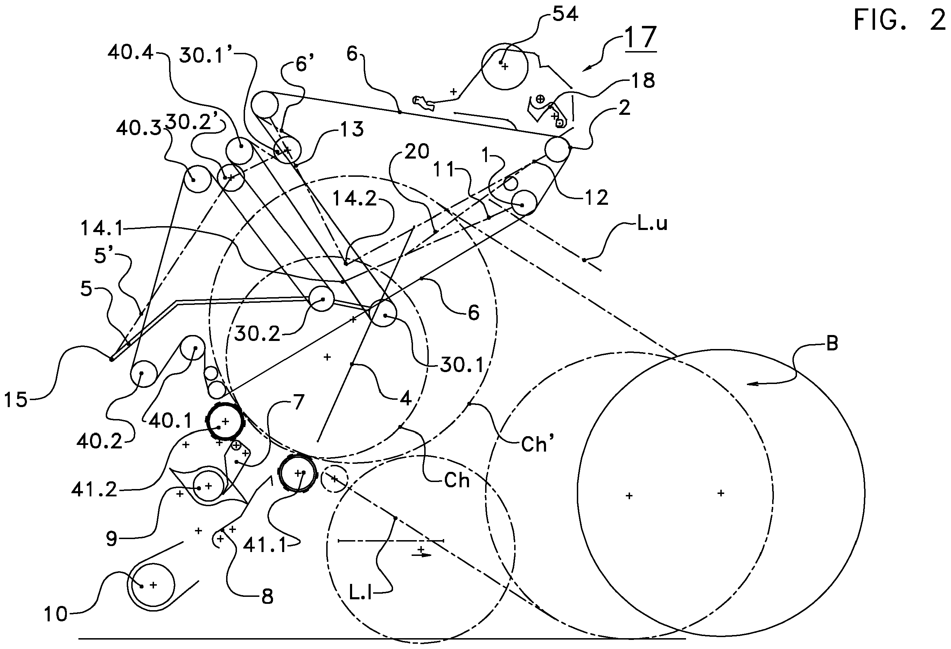

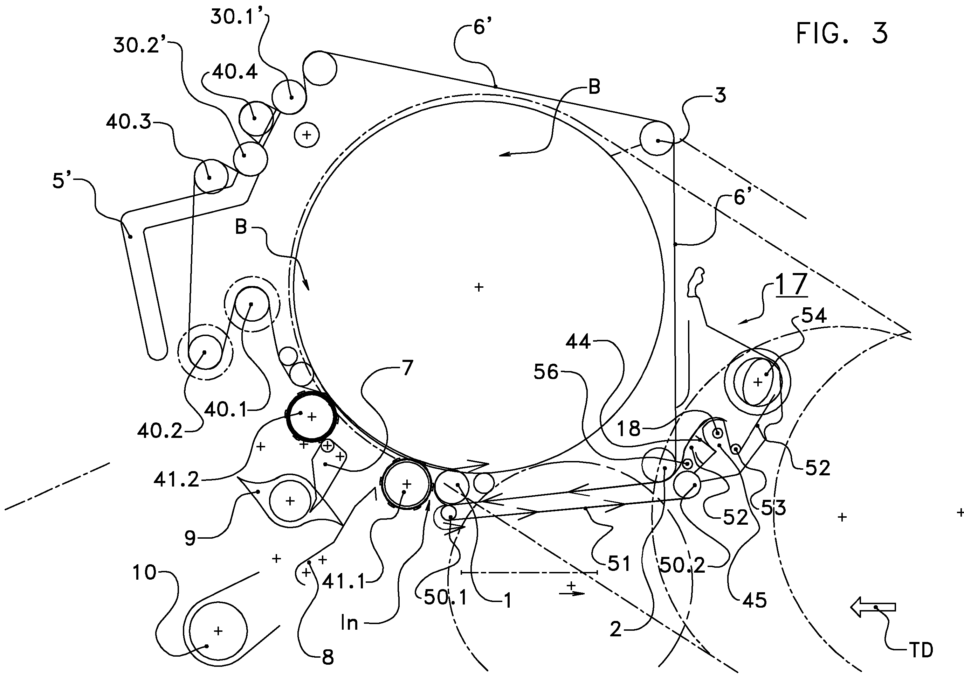

EP 2664230 A1 discloses a continuous round baler 100, cf. Fig. 2A and Fig. 2B. A first serpentine system 243 with baling belts 241 forms a bale in a baling chamber. A second serpentine system 246 with a plurality of further baling belts 248 can form a further bale in a second bale chamber 244, Fig. 3A and Fig. 3B. A first pair of arms 234, 275 is mounted adjacent to the first baling chamber. A second pair of arms 236, 284 is mounted near the second baling chamber. Adjacent to the floor rolls of the second bale chamber 440 a net wrapping device 410 is mounted.

A web of wrapping material is stored on a reservoir, e.g. on a rotatably held reel, and is taken from this reservoir, e.g. is pulled off from the reel, as soon as a given wrapping start condition is fulfilled. The web of wrapping material
- is guided towards a wrapping material inlet wherein the inlet guides into the bale forming chamber wherein the chamber is surrounded by the bale forming means and contains the bale,
- is injected through this wrapping material inlet into a space between the rotated bale and the bale forming means,
- is clamped between the bale forming means and the rotated bale and is conveyed by them, and
- is placed around the bale in the bale forming chamber.

In particular if the wrapping material inlet is positioned below the bale forming chamber or if the bale forming chamber is positioned between the wrapping material inlet and the reservoir, the web of wrapping material must be conveyed along a quite long way from the reservoir to the inlet. This takes time. The risk occurs that the web does not reach the wrapping material inlet. Therefore a conveying device for the web is desired.

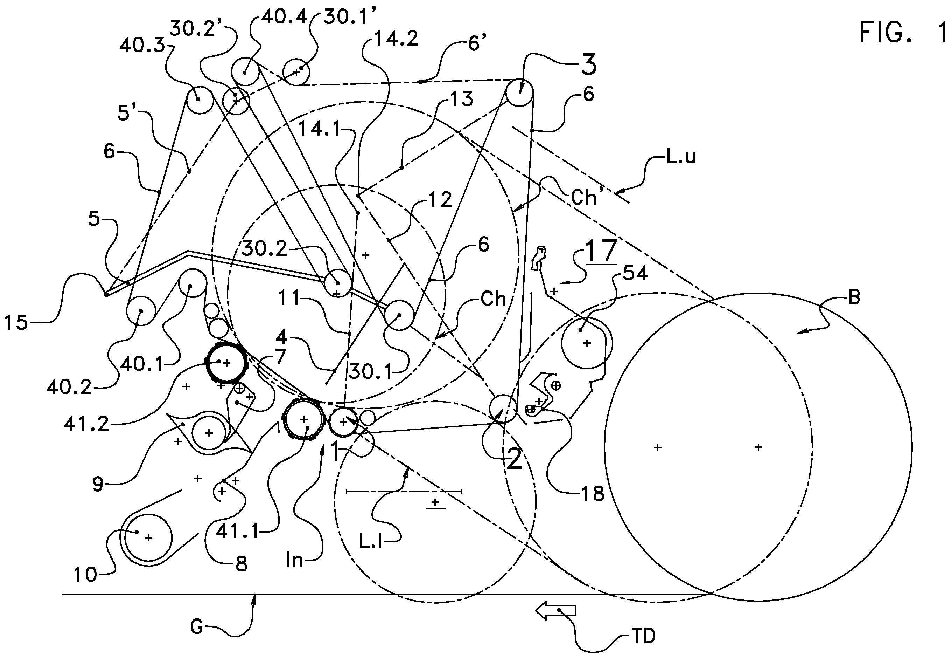

In US 5,115,734 a round baler is described. Loose crop material is picked up from the ground and is conveyed through a feed passage 5 into a pressing chamber 4, cf. Fig. 1. A tying material feed device 22 is mounted below the bottom wall 32 of the feed passage 5. A cylinder 27 can pivot a frame 23 of the tying device 22 around an axis 24 into a feeding position (Fig. 1) and into a retracted position (Fig. 10). As soon as the bale R has reached the required size, the cylinder 27 moves the tying device 22 into the feeding position. A feeding roller 25 of the tying device 22 engages a driven belt 11 below the pressed chamber 4 and is driven by the belt 11. The tying material 29 is advanced by the feeding roller 25 and a further roller 26 and afterwards by the feeding roller 25 and the driven belt 11 below the pressed chamber 4. The rotating bale R and additional press elements 9 further advance the tying material 29 such that the tying material 29 surrounds the bale R in the pressed chamber 4.

The baler 10 of US 5,129,207 comprises a wrap material dispensing system 34 mounted at the lower rear portion of the baler 10, cf. Fig. 1. A wrapping material supply system 36 unrolls wrapping material 39 from a supply roll 40 and supplies wrapping material 39 to a conveying assembly 38. This conveying assembly 38 cooperates with several bale-forming belts 12 which are arranged around the pressing chamber for forming a bale. The conveying assembly 38 cooperates with the belts 12 for wrapping a bale 14. Two pinch rollers 62, 64 advance wrapping material 39 from the supply roll 40. The conveying assembly 38 conveys wrapping material 39 by means of a several parallel conveying belts 88 which are guided around rollers 82 to 86, cf. Fig. 2. The belt-forming belts 12 engage the wrapping material conveying belts 88 and drive them. The wrapping material 39 is guided through an entryway 102 into the space between the belts 12 and 88 until the leading edge of the wrapping material 39 guides the roller 84 and is guided by a curved guiding element 104 towards the pressing chamber.

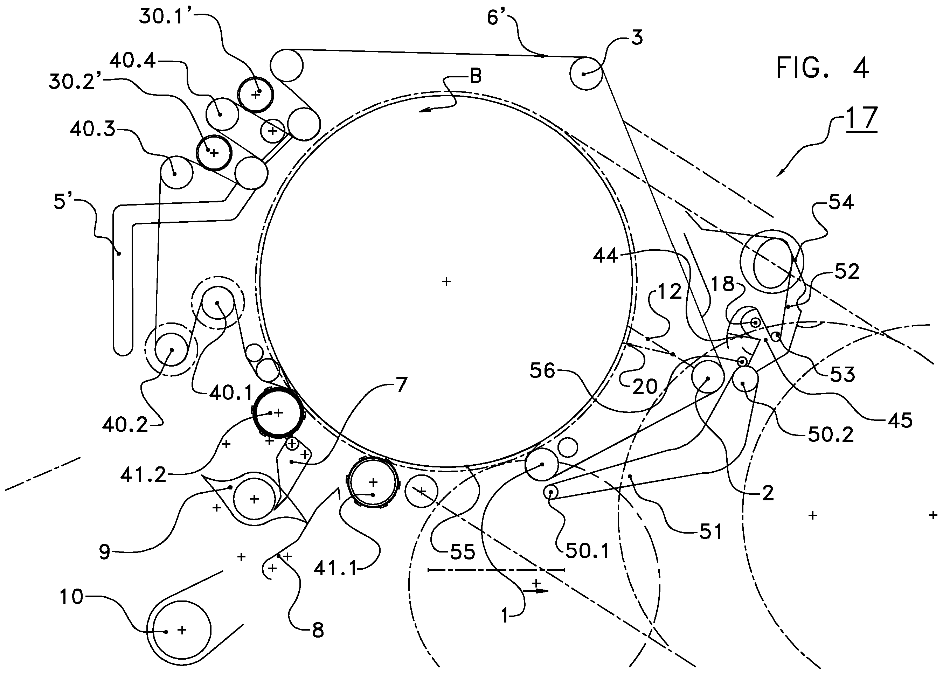

In US 5,129,208 a baler 10 with several bale-forming belts 20 and with a bale wrap feed apparatus 26 is described. The web feed apparatus 26 is mounted on a lower, rearward portion of the tailgate 16. Two wrap feed rollers 44 and 46 together grip the web 40 of wrapping material and pull the web 40 from a roll 28. The web feed roll 46 is driven via a V belt 54 guided around pulleys 50, 52, cf. Fig. 4. The web 40 is further conveyed by several parallel web feed belts 32 guided around rollers 34, 36, 38. A toggle roller 122 mounted between two toggle plates 124 tensions the web feed belts 32 and biases them against the bale-forming belts 20. The plates 124 with the toggle roller 122 can be pivoted between a drive position and a release position around a pivoting axis 126 by two cylinders 128, cf. Fig. 2 and Fig. 3. A belt guide rack 98 with several separator fingers 96 can be pivoted into an upper position in which the fingers 96 engage between bale-forming belts 20 and into a lower position below the web feed belts 32.

The baling press 10 of US 7,617,653 B2 wraps a bale 16 in the pressing chamber 12 into a wrapping web 18. The wrapping apparatus 14 is mounted at the front part of the baler 10, cf. Fig. 1. A propulsion element (roller 29) pulls wrapping web 18 from a reel 28. A guide device 30 with two walls 31, 34 transports the web 18 to a conveyor device 32. This conveyor device 32 conveys the web 18 towards the bale 16. A belt 37 of the web conveyor device 32 is guided around two rolls 33, 35, cf. Fig. 2. The roll 33 is driven and moves the belt 37.

In US 7,181,900 B2 the wrapping device with a reel 302 is mounted at the tailgate of a round baler. A web 304 of wrapping material is pulled from the reel 302 towards an inlet 92 which is positioned below the bale forming chamber. A net pan 420 is rotated around an axle 422 and presses the web 304 in a horizontal direction against the pressing belts 20. The web 304 is further guided through a funnel 112 and between the pressing belts 20 and a net feed pan 96 below the belts 20. The net feed pan 96 can pivot around an axle 100 and is biased by a spring 108 towards the belts 20.

A bale forming and wrapping apparatus according to the pre-characterising portion of claim 1 is known from EP 2 664 230.

### SUMMARY OF THE INVENTION

A problem solved by the invention is to provide a bale forming and wrapping apparatus with the features of the preamble of claim 1 and a bale forming and wrapping method with the features of the preamble of claim 12 wherein less mechanical torque or power is required for moving the discharge gate together with the wrapping material guiding device into the bale ejecting position and wherein the wrapping material guiding device does not form an obstacle against ejecting the bale when the discharge gate is in the bale ejecting position.

This problem is solved by a bale forming and wrapping apparatus with the features of claim 1 and by a bale forming and wrapping method with the features of claim 12. Preferred embodiments are specified in the depending claims.

The bale forming and wrapping apparatus comprises
- a bale forming means providing a bale forming chamber,
- a casing, and
- a wrapping material guiding device.

The casing comprises
- a discharge gate and
- a stationary casing part.

The discharge gate comprises
- an adjacent discharge gate part and
- a further discharge gate part.

The wrapping material guiding device comprises
- an adjacent wrapping material guiding member and
- at least one further wrapping material guiding part.

The adjacent wrapping material guiding member is mechanically connected with the adjacent discharge gate part. The further wrapping material guiding part is mounted at the further discharge gate part.

The discharge gate can be moved with respect to the stationary casing part
- into a bale forming position and
- into a bale ejecting position.

At least when the discharge gate is in the bale forming position, the adjacent discharge gate part is positioned between the further discharge gate part and the stationary casing part. When the discharge gate is in the bale forming position, the stationary casing part, the adjacent discharge gate part, and the further discharge gate part together belong to a casing which surrounds at least partially the bale forming means and thereby the bale forming chamber.

The discharge gate comprises two parts and is foldable: The adjacent discharge gate part can be moved with respect to the further discharge gate part away from the stationary casing part. The wrapping material guiding device also comprises two parts and is also foldable: The adjacent wrapping material guiding member can be moved with respect to the further wrapping material guiding member away from the stationary casing part.

While the discharge gate is in the bale forming position, the bale forming and wrapping apparatus according to the invention performs the following steps:
- The bale forming means forms a bale in the bale forming chamber.
- The wrapping material guiding device guides a web of wrapping material towards the bale forming chamber.
- The guided web is conveyed towards the bale forming chamber.
- The conveyed web is supplied to the bale forming chamber and is injected into the bale forming chamber.
- At least one surface of the bale in the bale forming chamber is wrapped into the injected web.

Afterwards the wrapped bale is ejected out of the bale forming chamber when the discharge gate is in the bale ejecting position.

The following further steps are performed after the bale is formed:
- Both parts of the discharge gate are moved from the bale forming position into the bale ejecting position.
- The movement of the discharge gate comprises the step that the adjacent discharge gate part is moved with respect to the further discharge gate part away from the stationary casing part.
- The adjacent wrapping material guiding member is moved with respect to the further wrapping material guiding part away from the stationary casing part.
- The wrapped bale is ejected out of the bale forming chamber after the adjacent discharge gate part is moved with respect to the further discharge gate part away from the stationary casing part and after the adjacent wrapping material guiding member is moved with respect to the further wrapping material guiding part away from the stationary casing part.

In contrast to conventional balers the discharge gate comprises two parts which can be folded together in a telescopic manner. When moving the discharge gate into the bale ejecting position the two-parted discharge gate is folded together. The wrapping material guiding device also comprises two parts, namely the two guiding members. The wrapping material guiding device is also folded together and the distance between the adjacent wrapping material guiding member and the further wrapping material guiding part decreases when the discharge gate is moved into the bale ejecting position.

### ADVANTAGES

Thanks to the wrapping material guiding device the web of wrapping material is securely guided along a path from a wrapping material reservoir to a wrapping material inlet guiding into the bale forming chamber. Less time is required for conveying the web towards the bale forming chamber. The risk that the web is not properly guided is reduced. Thanks to the wrapping material guiding device a holder for the wrapping material reservoir, e.g. an unrolling station for a supply reel, can be positioned at a suitable place adjacent to the discharge gate such that a human operator can ergonomically replace an empty reservoir in the holder with a new one. The position of the reservoir holder can be selected nearly independently from the position of the wrapping material inlet.

Thanks to the wrapping material guiding device the web is also securely guided and conveyed if the bale forming and wrapping apparatus belongs to a vehicle which is operated in a hilly environment such that the inclination and/or tilting angle of the vehicle can change during operation. The vehicle can belong to an agricultural harvester which is operated on a field and is therefore subjected to wind, rain, dirt, and further environmental conditions which can neither be predicted nor be influenced. Thanks to the wrapping material guiding device the web is nevertheless securely guided and conveyed to the wrapping material inlet. Thanks to the guiding device the risk is significantly reduced that the conveyed web does not reach the wrapping material inlet.

Thanks to the wrapping material guiding device the same bale forming and wrapping apparatus can subsequently process different kinds of wrapping material, e.g. different kinds of net or a net as well as a plastic sheet. These different kinds can have different frictional or elastic properties. No sensor for detecting the kind of the currently used wrapping material is required. This advantage is achieved by using a wrapping material guiding device.

A bale is formed and wrapped in the bale forming chamber while the discharge gate is in the bale forming position. Afterwards the discharge gate which carries the wrapping material guiding device and in a preferred embodiment a reservoir for wrapping material and a reservoir holder is moved into the bale ejecting position. In general this movement is performed against the force of gravity and requires mechanical power. A sufficiently brought aperture between the discharge gate moved into the bale ejecting position and the stationary discharge gate part must be provided for ejecting the bale. The wrapped bale is ejected through this provided aperture. The time for providing the aperture by moving the discharge gate into the bale ejecting position and the weight of the parts mounted at the discharge gate influences the throughput achieved by the bale forming and wrapping apparatus, in particular while subsequently forming several bales.

The discharge gate of a conventional baler comprises a one-parted carrying structure. If at all, the wrapping material guiding device is mounted at this carrying structure - or at the stationary casing part. Often several bale forming members of the bale forming means are mounted at the carrying structure of the discharge gate. In a conventional baler the entire discharge gate including the carrying structure, the wrapping material guiding device, the wrapping material reservoir, and the reservoir holder have to be moved over substantially the same distance when the discharge gate is moved into the bale ejecting position. The wrapping material guiding device and the bale forming members at the carrying structure must also be moved over this distance.

In a baler according to the invention, however, the adjacent wrapping material guiding member is carried by the adjacent discharge gate part. It suffices to move the adjacent discharge gate part and the adjacent wrapping material guiding member along a longer trajectory when moving the discharge gate into the bale ejecting position. With other words: Only the adjacent wrapping material guiding member is moved along the longer trajectory but not the entire wrapping material guiding device. The further discharge gate part carrying the further wrapping material guiding member is only moved along a shorter trajectory. The wrapping material reservoir and the reservoir holder can be mounted at the further discharge gate part and therefore also need only to be conveyed along the shorter trajectory. Thanks to the invention the adjacent wrapping material guiding member can be moved along a specific trajectory differing from that of the further wrapping material guiding device. The longer trajectory is a superposition of
- a joint trajectory and
- a specific trajectory.

When moving the discharge gate into the bale ejecting position, both discharge gate parts are moved along the joint trajectory away from the stationary casing part. The joint trajectory serves as the shorter trajectory for the further discharge gate part. The adjacent discharge gate part is moved along this joint trajectory away from the stationary casing part together with the further discharge gate part when the discharge gate including the adjacent discharge gate part is moved from the bale forming position into the bale ejecting position. In addition the adjacent discharge gate part is moved with respect to the further discharge gate part along the specific trajectory away from the stationary casing part. The specific trajectory can be as long as the joint trajectory or can be shorter or longer.

One feature of the invention can also be described as follows: The discharge gate is moved away from the stationary casing part and is additionally folded together when being moved from the bale forming position to the bale ejecting position. Moving the adjacent discharge gate part relative to the further discharge gate part means to fold together the two-parted discharge gate.

The bale is wrapped while the discharge gate is in the bale forming position. Therefore the wrapping material guiding device is only needed while the discharge gate is in the bale forming position and only while the web is conveyed from the reservoir to the bale forming chamber. It is not needed when the discharge gate is moved into the bale ejecting position or is already in the bale ejecting position. In general it is also not needed after the web is injected into the bale forming chamber. Therefore it is possible but thanks to the invention not necessary that the wrapping material guiding device can operate properly when the adjacent wrapping material guiding member is moved or has been moved with respect to the further wrapping material guiding part.

According to the invention only the adjacent discharge gate part and the adjacent wrapping material guiding member are moved along the combined longer trajectory when the discharge gate is moved from the bale forming position into the bale ejecting position but not the further discharge gate part and the further wrapping material guiding part and not necessarily the reservoir holder and the reservoir. An aperture for ejecting a bale is provided between the stationary casing part and the moved discharge gate. As the adjacent discharge gate part being in the bale forming position is positioned between the stationary casing part and the further discharge gate part, the adjacent discharge gate part delimits the provided aperture after the discharge gate has been moved into the bale ejecting position. For providing this aperture only the adjacent discharge gate part and the adjacent wrapping material guiding member have to be moved along the longer trajectory. The further discharge gate part and the further wrapping material guiding part need only to be moved along the joint trajectory, i.e. over a shorter distance. Therefore less mechanical power and/or less time is required for moving the discharge gate into the bale ejecting position.

The wrapping material guiding device must not form an obstacle against ejecting a bale out of the bale forming chamber. Moving the discharge gate into the bale ejecting position requires moving the wrapping material guiding device away from the stationary casing part. This requires mechanical power.

To cope with these challenges, the wrapping material guiding device according to the invention comprises two parts and is foldable. According to the invention the adjacent wrapping material guiding member is moved with respect to the further wrapping material guiding part away from the stationary discharge gate part when the discharge gate is moved into the bale ejecting position. Not only the discharge gate but also the wrapping material guiding device is folded together when the discharge gate is moved into the bale ejecting position. Therefore not the entire wrapping material guiding device needs to be moved over the longer trajectory but only the adjacent wrapping material guiding member. In particular a reservoir for wrapping material and a reservoir holder, e.g. an unrolling station, can be mounted at the further discharge gate part and needs only to be moved over the joint trajectory.

According to the invention the adjacent wrapping material guiding member is also moved with respect to the further wrapping material guiding member away from the stationary discharge gate part when the discharge gate is moved into the bale ejecting position. Therefore the adjacent wrapping material guiding member does not form an obstacle against ejecting the bale when the discharge gate is in the bale ejecting position. Not only the two-parted discharge gate but also the two-parted wrapping material guiding device is folded together when the discharge gate is moved into the bale ejecting position. This increases the provided ejecting aperture without requiring more mechanical power or time.

A baler according to the invention achieves the following advantage over a conventional baler: Less mechanical power and less torque are required for moving the discharge gate carrying the wrapping material guiding device into the bale ejecting position. Therefore less power and torque are required for providing the required aperture. An alternative advantage is that the discharge gate carrying the wrapping material guiding device can be moved into the bale ejecting position with the same power and torque but in a shorter time. This decreases the time required for providing the bale ejecting aperture and increases the throughput through the baler.

Thanks to the invention it is possible but not necessary to increase the provided aperture by pivoting a part of the stationary casing part away from the discharge gate, e.g. by pivoting a ramp downwards. It is further possible but thanks to the invention not necessary to arrange a resilient or an elastic part at the discharge gate or at the stationary casing part in a position adjacent to the provided aperture for the sake of enlarging the aperture.

### PREFERED EMBODIMENTS

In one embodiment a reservoir holder for a reservoir with wrapping material is mounted at the further discharge gate part. The reservoir holder can comprise an unrolling station and a brake for a supply reel with wrapping material. The wrapping material guiding device - or at least that guiding member which touches the wrapping material at least temporarily when the web is conveyed - is positioned between the reservoir holder and the wrapping material inlet. Thanks to this embodiment the reservoir holder and the reservoir itself need only to be moved along the shorter joined trajectory.

Preferably the discharge gate is directly or indirectly connected with the stationary casing part or with a frame of the baler. A gate actuator is connected with the stationary casing part or with the frame and is connected with the further discharge gate part and can move the further discharge gate part with respect to the stationary discharge gate part along the joint trajectory from the bale forming position into the bale ejecting position. This movement also moves the adjacent discharge gate part and the adjacent wrapping material guiding member along the joint trajectory away from the stationary casing part.

In one implementation a mechanical discharge gate coupling device couples the adjacent discharge gate part with the or at least one further discharge gate part. The discharge gate coupling device transfers a movement of the further discharge gate part into the bale ejecting position onto the adjacent discharge gate part. This transferred movement moves the adjacent discharge gate part and the adjacent wrapping material guiding member with respect to the further discharge gate part away from the stationary casing. Therefore the discharge gate coupling device causes the relative movement along the specific trajectory.

This implementation saves an own actuator for the adjacent discharge gate part which can move the adjacent discharge gate part with respect to the further discharge gate part. Thanks to this embodiment a discharge gate actuator only needs to move the further discharge gate part along the shorter joint trajectory. In case of a discharge gate actuator comprising at least one piston-cylinder device the or every piston needs only to perform shorter strokes. Shorter cylinder suffices.

In one implementation two pulling rollers clamp the web of wrapping material. At least one pulling roller is temporarily driven. The clamping pulling rollers pull the web from the reservoir. The wrapping material guiding device is positioned between the pulling rollers and a wrapping material inlet guiding into the bale forming chamber. The reservoir and the pulling rollers are mounted at the further discharge gate part and need only to be moved along the shorter joint trajectory. The pulling rollers cooperate with the subsequent wrapping material guiding device. The web which is pulled from the reservoir is further guided and in one implementation actively conveyed towards the wrapping material inlet by the adjacent wrapping material guiding member. This adjacent wrapping material guiding member can comprise a guiding sheet or a driven or idler roller, preferably with ribs on its circumferential surface.

In one implementation the adjacent wrapping material guiding member is mounted at the adjacent discharge gate part and cannot be moved with respect to the adjacent discharge gate part and is moved together with the adjacent discharge gate part. This implementation enables an easy mechanical construction.

In an alternative implementation the adjacent wrapping material guiding member is moveably mounted at the adjacent discharge gate part. The adjacent wrapping material guiding member is moved away from the stationary casing part with respect to the adjacent discharge part when the discharge gate is moved into the bale ejecting position.

This implementation with the moveably mounted adjacent wrapping material guiding member enables to position the adjacent wrapping material guiding member close to the stationary casing part. This position is in particular of advantage if the wrapping material inlet is arranged between the stationary casing part and while the discharge gate is in the bale forming position, e.g. below the bale forming chamber. The adjacent wrapping material guiding member is positioned close to the wrapping material inlet and can guide and contribute to convey a web of wrapping material as long as possible on its way towards the wrapping material inlet. According to the alternative implementation the adjacent wrapping material guiding member is moved away from the stationary casing part and is hereby moved with respect to the adjacent discharge gate part when the discharge gate is moved into the bale ejecting position. Therefore the adjacent wrapping material guiding member can be positioned close to the wrapping material inlet and does nevertheless not form an obstacle hindering the ejection of a bale when the discharge gate is in the bale ejecting position.

In one implementation of the moveable adjacent wrapping material guiding member a mechanical guiding device coupling member couples a movement of the adjacent discharge gate part away from the stationary casing part with a movement of the adjacent wrapping material guiding member with respect to the adjacent discharge gate part - or with respect to the further discharge gate part - away from the stationary casing part. The adjacent wrapping material guiding member follows the movement of the adjacent discharge gate part. This guiding device coupling member can be implemented as a purely passive mechanical part. In a further implementation the wrapping apparatus comprises an own actuator which moves the adjacent wrapping material guiding member with respect to the adjacent discharge gate part.

In one embodiment at least one wrapping material guiding member can be moved between a conveying position and a parking position. The bale forming means and the or at least one moveable part of the wrapping material guiding device being in the conveying position together clamp and convey a wrap of wrapping material towards the wrapping material inlet. It is possible that the wrapping material guiding device comprises an own drive which moves the or at least one moveable part. It is also possible, however, that the web is driven only by the bale forming means, i.e. the wrapping material guiding device does not comprise an own drive and the guiding members operate as idler members which passively guide the web. The bale forming means can be driven and be moved with the same velocity while the bale is formed, while the web is conveyed, and while the bale in the bale forming chamber is wrapped.

It is not necessary to change the moving velocity of the bale forming means. This reduces the stress applied onto the bale forming means. A distance between the bale forming means and the wrapping material guiding device with the or every moveable part of the wrapping material guiding device being in the parking position occurs such that the bale forming means does not touch and convey a web.

In one implementation the wrapping material guiding device comprises a web conveying belt. The web conveying belt contributes to conveying a web of wrapping material towards the bale forming chamber such that a bale in the bale forming chamber can be wrapped into the web inserted into the bale forming chamber. The web conveying belt is only used when a bale in the bale forming chamber is to be wrapped and while the web is conveyed and until the web is inserted into the bale forming chamber.

The web conveying belt is guided around and deflected by at least two deflecting rollers. One deflecting roller belongs to the adjacent wrapping material guiding member and the other deflecting roller to the further wrapping material guiding part. When the discharge gate is moved into the bale ejecting position, one deflecting roller is moved away from the stationary casing part and towards the other deflecting roller. Preferably at least one deflecting roller can be moved between a conveying position and a parking position. Preferably the moveable roller belongs to the adjacent wrapping material guiding member. When the or every moveable deflecting roller is in the conveying position, the web conveying belt presses a web of wrapping material against the bale forming means.

In this implementation the web conveying belt can be moved between a conveying position and a parking position. The web conveying belt only touches the web when the web conveying belt is in the conveying position. A distance between the web conveying belt being in the parking position and the web occurs. The web conveying belt being in the parking position keeps the web. Preferably the web conveying belt can be moved between the different positions by moving at least one web deflecting roller.

In an alternative implementation the web conveying belt always touches the web. The web conveying belt is operated in a start-stop operation and can selectively convey the web or keep the web in a parking position.

In one implementation at least one deflecting roller is driven and moves the web conveying belt. In a further implementation every deflecting roller is an idler roller. The web conveying belt presses the web against a driven baler forming means, e.g. against a pressing belt.

In an alternative embodiment at least one rotatable member of the wrapping material guiding device, e.g. a roller, permanently or temporarily touches the web. A drive can rotate the or at least one rotatable member. The drive operates in a start-stop mode, i.e. it selectively rotates the rotatable member or interrupts the rotation.

In one implementation a clutch selectively establishes or disconnects a powertrain which connects the rotatable member with a permanently operating motor or with a baler part which is permanently moved, e.g. with a pressing roller or a belt moving roller.

In an alternative embodiment the rotatable member can be moved between a conveying position and a parking position. The rotatable member touches the web only when it is in the conveying position. This alternative embodiment enables a continuous movement of the rotatable member. The rotatable member being in the parking position is also rotated and can remove debris.

As mentioned above the web conveyor belt of the wrapping material guiding device is only used when a bale in the bale forming chamber is to be wrapped. In this situation the discharge gate is still in the bale forming position. The web conveyor belt is not used when the discharge gate is moved into the bale ejecting position or has already reached the bale ejecting position. When the web conveyor belt is not used, the web conveyor belt needs not to be tensioned and deflected by the deflecting rollers. Therefore one deflecting roller can be moved towards the other deflecting roller and the distance between these rollers can be reduced when the discharge gate is opened.

In one implementation the wrapping material guiding device comprises an own actuator which moves the or every moveable part of the wrapping material guiding device between the parking position and the conveying position. In a further implementation such an own actuator is saved. In contrast to or additional to the implementation with the own actuator the wrapping material guiding device comprises a mechanical guiding device coupling member. This guiding device coupling member couples the or at least one moveable part of the wrapping material guiding device with a further moveable part of the bale forming and wrapping apparatus. This further part can be moved between different positions. A drive moves this further part.

In one embodiment this moveable further part processes the web of wrapping material, e.g. severs the web or feeds the web towards the wrapping material inlet.

In one implementation the further moveable part belongs to the severing device and can be moved from a parking position into a severing position. Moving this severing device part severing device into the severing position severs the web. This movement into the severing position is transferred by the guiding device coupling member onto the or at least one moveable wrapping material guiding member. By this transfer the or at least one moveable wrapping material guiding device part is moved from the conveying position into the parking position.

After severing the web no wrapping material is conveyed until the next bale is to be wrapped. Therefore the or every moveable wrapping material guiding device part preferably remains in the parking position.

In a further implementation a further feeding device, e.g. a further web conveying member, can be moved into a feeding position and into a parking position. Transferring the further web conveying member into the feeding position causes the or every moveable wrapping material guiding member to be transferred into the conveying position.

In yet a further embodiment the or every moveable wrapping material guiding device part is coupled with a discharge gate part, e.g. with the adjacent and/or with the further discharge gate part. The mechanical guiding device coupling member transfers a movement of the discharge gate part into the bale ejecting position onto the or every moveable wrapping material guiding member. This transfer causes the or every wrapping material guiding device part to be transferred from the conveying position into the parking position.

The invention can be used in a bale forming apparatus with a variable bale forming chamber, i.e. a chamber which increases while a bale is formed in the chamber. The invention can also be used in a bale forming chamber with fixed size. The bale forming means can comprise at least one pressing belt which partially surrounds the bale forming chamber. The bale forming means can also comprise a sequence with several pressing rollers wherein the sequence partially surrounds the bale forming chamber.

These and other aspects of the invention and of the preferred embodiment will be even more apparent from the detailed embodiment as described below and will be elucidated in detail there.

### BRIEF DESCRIPTION OF THE DRAWINGS

- Fig. 1: shows a baler according to the embodiment with the two-parted discharge gate in the bale forming position;
- Fig. 2: shows the baler of Fig. 1 with the discharge gate in the bale ejecting position;
- Fig. 3: shows an alternative embodiment of the baler of Fig. 1 with the foldable web conveying device wherein the two-parted discharge gate is in the bale forming position;
- Fig. 4: shows the baler of Fig. 3 with the discharge gate in an intermediate position;
- Fig. 5: shows the baler of Fig. 4 with the discharge gate in the bale ejecting position.

### DETAILED DESCRIPTION OF EMBODIMENT

In the embodiment the invention is used in a round baler for agricultural purposes. Fig. 1 and Fig. 2 show a bale forming apparatus (baler) comprising a foldable two-parted discharge gate according to the invention. In Fig. 1 and Fig. 2 the foldable wrapping material guiding device is not shown.

A tractor (not shown) moves this baler over ground G in a traveling direction TD. The baler forms under pressure a round-cylindrical bale B in a bale forming chamber increasing from Ch to Ch', wraps the bale B into wrapping material, and ejects the wrapped bale B out of the bale forming chamber Ch, Ch'. The bale forming chamber Ch, Ch' is surrounded by a casing comprising a stationary front housing and a pivotal discharge gate.

Fig. 1 and Fig. 2 show the following parts of the baler:
- a pick-up unit with a rotated pick-up drum 10 on which several pick-up tines are spring-mounted,
- a feeding channel with a feeding channel bottom 8,
- a conveying rotor 9 with rigid tines engaging from above into the feeding channel,
- a stripping unit 7 for clearing the gaps between the rigid tines of the conveying rotor 9,
- two starter rollers 41.1, 41.2 which form the two borders of a crop material inlet into the bale forming chamber Ch, Ch',
- at least one pressing belt 6 partially surrounding the bale forming chamber Ch, Ch',
- a pivotal tensioning member 5 for tensioning the or every pressing belts 6 wherein the tensioning member 5 comprises a left pivotal arm and a corresponding right pivotal arm (not shown) wherein the tensioning member 5 is pivotally mounted at the front housing and carries several moveable deflecting rollers 30.1, 30.2,
- several stationary deflecting rollers 40.1, 40.2, 40.3, 40.4 for the or every pressing belt 6 which are rotatably mounted at the front housing (not shown) of the baler,
- several moveable deflecting rollers 30.1, 30.2 rotatably mounted at a pivotal tensioning member 5,
- a pivotal holding member 11 for a deflecting roller 1 wherein the holding member 11 comprises a left holding arm and a corresponding right holding arm (not shown) belonging to the discharge gate (tailgate) of the baler,
- two pivotal carrying members 12, 13 for two further deflecting rollers 2, 3 wherein every carrying member 12, 13 comprises two left carrying arms and two corresponding right carrying arms (not shown) and also belongs to the discharge gate wherein the four arms are rigidly connected with each other,
- a mechanical connecting member 20 comprising a left connecting rod and a corresponding right connecting rod wherein the connecting member 20 couples the holding member 11 with the carrying member 12 and serves as the mechanical discharge gate coupling device,
- an adjacent deflecting roller 1 (adjacent to the front housing) for the or every pressing belts 6 wherein the adjacent deflecting roller 1 is rotatably mounted between the holding arms of the pivotal holding member 11,
- a deflecting roller 2 for the or every pressing belt 6 wherein the deflecting roller 2 is rotatably mounted between the carrying arms of the pivotal carrying member 12,
- a deflecting roller 3 for the or every pressing belt 6 wherein the deflecting roller 2 is rotatably mounted between the carrying arms of the pivotal carrying member 13,
- a hydraulic tailgate actuator 4 for pivoting the carrying members 12, 13 and comprising a left piston-cylinder device and a right piston-cylinder device (not shown),
- a wrapping apparatus 17 with an unrolling station which rotatably carries a supply reel 54 with wrapping material, and
- a wrapping material inlet In which is positioned between the adjacent deflecting roller 1 and the starter roller 41.1.

The terms "left" and "right" refer to the travelling direction TD of the baler.

The or every pressing belt 6 is guided around
- the stationary deflecting rollers 40.1, 40.2, 40.3, 40.4,
- the moveable deflecting rollers 30.1, 30.2 mounted on the tensioning member 5,
- the deflecting rollers 2, 3 mounted at the carrying members 12, 13, and
- the adjacent deflecting roller 1 mounted at the holding member 11.

At least one stationary deflecting roller 40.1, 40.2, 40.3, 40.4 is driven and moves the or every pressing belt 6. The deflecting rollers 1, 2, 3 mounted at the discharge gate 11, 12, 13 and the moveable deflecting rollers 30.1, 30.2 mounted at the tensioning member 5 are idler rollers.

The tensioning member 5 with the moveable deflecting rollers 30.1, 30.2 can be pivoted with respect to the front housing (not shown) around a pivoting axis 15. Fig. 1 shows the pivotal tensioning member 5 in the lowermost position (double continuous line) and in the uppermost position (reference sign is 5', dotted line). While a bale is formed in the bale forming chamber Ch and increases, the increasing bale pulls at the pressing belts 6. The pressing belts 6 pivot the tensioning member 5 against the retaining force of a retaining device (not shown) from the lowermost position 5 to the uppermost position 5'. The tensioning member 5' corresponds to the fully expanded bale forming chamber Ch'. The pressure which the pressing belts 6 apply onto the bale B in the bale forming chamber Ch, Ch' remains below a given threshold. It is also possible that a tensioning actuator actively pivots the tensioning member 5 against the expanding force of the bale B.

The two carrying members 12 and 13 are rigidly connected with each other and belong to a pivotal carrying structure carrying the deflecting rollers 2, 3 and the wrapping apparatus 17. This pivotal carrying structure can jointly rotate around the pivoting axis 14.2. The pivotal holding member 11 for the adjacent deflecting roller 1 can pivot with respect to the front housing and with respect to the pivotal carrying structure 12, 13 around a pivoting axis 14.1. The holding member 11 can be connected with the front housing or with the pivotal carrying structure comprising the carrying members 12, 13.

The three pivoting axes 14.1, 14.2, and 15 are parallel to each other and to the rotating axes of the starter rollers 41.1, 41.2 and of the deflecting rollers and are perpendicular to the travelling direction TD of the baler and to the drawing planes of the figures. In the embodiment a distance between the two pivoting axes 14.1, 14.2 occurs.

The two pivotal carrying members 12, 13 comprising the two left carrying arms and the corresponding right carrying arms belong to a pivotal carrying structure forming the further discharge gate part. In one embodiment the holding member 11 is pivotally mounted at this pivotal carrying structure 12, 13. The pivotal carrying structure 12, 13 and the holding member 11 belong to the pivotal tailgate of the baler. This tailgate serves as the discharge gate. The deflecting rollers 1, 2, 3 are mounted at this tailgate 11, 12, 13. The holding member 11 belongs to the adjacent discharge gate part. The front housing (not shown) forms the stationary casing part.

The wrapping apparatus 17 is mounted at the carrying structure 12, 13 and comprises a severing device 18 for the wrapping material, a pivotal cover, and a backplane (not shown) extending perpendicular to the travelling direction TD. This backplane also belongs to the pivotal carrying structure. The backplane is rigidly connected with the pivotal carrying structure 12, 13 and can only be pivoted together with the carrying structure 12, 13. Therefore the entire wrapping apparatus 17 is mounted at the carrying structure 12, 13 and can be pivoted together with the carrying structure 12, 13.

The tailgate actuator 4 (gate actuator) comprises a left hydraulic piston-cylinder device (schematically shown) and a corresponding right hydraulic piston-cylinder device (not shown) which are positioned - seen opposite to the travelling direction - in a vertically sloping manner. The tailgate actuator 4 is in its upper end pivotally connected with the carrying member 12 carrying the deflecting roller 2. The tailgate actuator 4 is in its lower end connected with the front housing (stationary casing part). The tailgate actuator 4 can expand and retract. By an expanding movement the tailgate actuator 4 can pivot the carrying member 12 and therefore the entire pivotal carrying structure 12, 13 and the wrapping apparatus 17 around the pivoting axis 14.2 against the force of gravity upwards and away from the front housing.

The connecting member 20 connects the holding member 11 with the pivotal carrying structure 12, 13, cf. Fig. 2 to Fig. 4. The left connecting rod of the connecting member 20 connects the left carrying arm of the carrying member 12 for the deflecting roller 2 with the left holding arm of the holding member 11 for the adjacent deflecting roller 1. A corresponding right connecting rod (not shown) connects the right carrying arm of the carrying member 12 with the right holding arm of the holding member 11.

In one embodiment the connecting member 20 is directly pivotally connected with the carrying member 12 and the holding member 11. In a further embodiment a left sleeve is mounted at the upper end of the left connecting rod 20 and the left arm of the carrying member 12 is guided through this left sleeve. A right sleeve is mounted at the upper end of the right connecting rod 20 and the right arm of the carrying member 12 is guided through this right sleeve. It is also possible that further sleeves are mounted at the lower ends of the connecting rods and that the holding arms of the holding member 11 are guiding through these lower sleeves. The members 11, 12 can therefore linearly be shifted with respect to the connecting member 20.

Fig. 1 shows the baler with the pivotal tailgate 11, 12, 13, 20 in the bale forming position. In the bale forming position the or every pressing belt 6 surrounds the entire bale forming chamber Ch, Ch' with the exception of the crop material inlet between the starter rollers 41.1 and 41.2 and the wrapping material inlet In between the rollers 1 and 41.1. While the tailgate is in the bale forming position, the adjacent deflecting roller 1 is in a position adjacent to the starter roller 41.1. The wrapping material inlet In is positioned between the adjacent deflecting roller 1 and the starter roller 4.1, i.e. between the tailgate 11, 12, 13, 20 and the front housing. The tailgate 11, 12, 13, 20 remains in the bale forming position while the bale B is formed and while the step of injection wrapping material through the wrapping material inlet In is started. In one embodiment the tailgate remains in the bale forming position until the circumferential surface of the bale B in the bale forming chamber Ch, Ch' is sufficiently wrapped into the inserted wrapping material.

An increasing bale B is formed in the bale forming chamber Ch which is surrounded by the or every pressing belt 6. Fig. 1 shows a smaller bale forming chamber Ch and a larger bale forming chamber Ch'. While the bale B is formed and further crop material is injected, the bale forming chamber increases from Ch to Ch'. While the bale forming chamber increases from Ch to Ch', the tensioning member is pivoted from the position indicated by 5 to the position 5'. Simultaneously the moveable deflecting rollers are moved from the positions indicated by 30.1, 30.2 to the positions 30.1', 30.2'.

A value indicative of the current diameter of the round-cylindrical bale in the bale forming chamber Ch, Ch' is repeatedly measured, e.g. by measuring the pivoting angle of the pivotal tensioning member 5 with respect to the front housing. After the measured actual diameter of the bale B in the bale forming chamber Ch' reaches a given diameter threshold, the wrapping procedure starts. A web of wrapping material is pulled from the reel 54 and is guided on a trajectory below the wrapping apparatus 17 and below the lowest segment of the pressing belt 6. This lowest belt segment extends between the rollers 1, 2 to the wrapping material inlet In. The pressing belt(s) 6 convey the web.

In one embodiment a guiding sheet (not shown) presses the web of wrapping material against the outer surface of the or at least one pressing belt 6. A guiding sheet deflects the web 52 into the wrapping material inlet In.

The web 52 of wrapping material is guided through the wrapping material inlet In and is injected into the bale forming chamber Ch. The or at least one pressing belt 6 and the rotating bale together clamp and grasp the injected web of wrapping material. After a given number of wrapping material layers is placed around the bale in the bale forming chamber Ch', the circumferential surface of the round-cylindrical bale B is sufficiently wrapped and the wrapping procedure is completed. The web of wrapping material is severed by the severing device 18 at a severing position outside of the bale forming chamber Ch' and between the supply reel 54 and the wrapping material inlet In. During the entire wrapping procedure the or every pressing belt 6 rotates the bale B.

Now the wrapped bale B has to be ejected out of the bale forming chamber Ch'. For doing so the tailgate actuator 4 expands and the tailgate 11, 12, 13, 20 is pivoted from the bale forming position of Fig. 1 to the fully opened position, i.e. to the bale ejecting position of Fig. 2. A comparison of Fig. 1 with Fig. 2 shows how the two-parted tailgate 11, 12, 13, 20 is folded together when being moved from the bale forming position into the bale ejecting position.

Fig. 1 and Fig. 2 show two lines L.l and L.u. These two lines L.l, L.u represent the lower border and the upper border of the required aperture for ejecting the bale B. Between these two lines L.l, L.u no obstacle for ejecting the bale B must occur. Otherwise the bale B cannot properly be ejected out of the bale forming chamber Ch'.

The tailgate 11, 12, 13, 20 is pivoted away from the front housing and against the force of gravity as follows:
- The tailgate actuator 4 (two hydraulic piston-cylinder devices) expands.
- The tailgate actuator 4 pivots the connected carrying member 12 around the pivoting axis 14.2 away from the front housing.
- As the carrying member 13 is rigidly connected with the carrying member 12, the carrying member 13 is also pivoted around the pivoting axis 14.2 with the same velocity and around the same angle.
- The two deflecting rollers 2, 3 on the pivotal carrying members 12, 13 are pivoted away from the front housing in an upward direction.
- The wrapping apparatus 17 including the wrapping material reel 54 being mounted at the backplane of the tailgate 11, 12, 13, 20 is also pivoted away from the front housing.

As can best be seen in Fig. 2, the carrying member 12 is connected with the holding member 11 by means of the connecting member 20. The connecting member 20 transfers the pivotal movement of the carrying member 12 away from the front housing onto the holding member 11. Therefore the holding member 11 is pivoted around the pivoting axes 14.1. Thanks to the coupling member 20 the holding member 11 is pivoted in substantially the same time but with a larger velocity and around a greater pivoting angle away from the front housing than the carrying structure 12, 13. The carrying structure 12, 13 is pivoted along the shorter trajectory. The holding member 11 is simultaneously pivoted along the longer trajectory.

The adjacent deflecting roller 1 on the free end of the holding member 11 is also pivoted away from the front housing when the tailgate 11, 12, 13, 20 is pivoted into the bale ejecting position.

As the carrying members 12 and 13 are rigidly connecting with each other, the distance between the two deflecting rollers 2 and 3 remains constant while pivoting the tailgate 11, 12, 13, 20. The deflecting roller 1 on the holding member 11, however, is pivoted towards the deflecting roller 2 while the tailgate 11, 12, 13, 20 is pivoted into the bale ejecting position. The distance between the two deflecting rollers 1 and 2 decreases while the tailgate 11, 12, 13, 20 is pivoted away from the front housing. The distance between the deflecting roller 1 and the front housing increases faster than the distance between the deflecting roller 2 and the front housing.

Fig. 2 shows the tailgate 11, 12, 13, 20 in the bale ejecting position. The distance between the two deflecting rollers 1 and 2 is now significantly smaller than the distance with the tailgate being in the bale forming position (Fig. 1). The deflecting roller 1 is now positioned above the upper limiting line L.u. As the deflecting roller 1 is now above the provided aperture between the lines L.u, L.l, the adjacent deflecting roller 1 does not form an obstacle for ejecting the bale B. The wrapped bale B is ejected through the provided aperture out of the bale forming chamber Ch'.

Fig. 3 to Fig. 5 show an embodiment of the foldable two-parted tailgate and the foldable wrapping material guiding device according to the invention. Coinciding parts have the same reference signs as in Fig. 1 and Fig. 2. In addition Fig. 3 to Fig. 5 show a severing device with a knife 44 mounted on a knife carrier 45. The knife carrier 45 and the knife 44 can pivot around an axis 18. An actuator (not shown) can move the knife carrier 45 and thereby the knife 44 around the axis 18 between a parking position and a severing position. The knife 44 being in the severing position penetrates and severs the web 52.

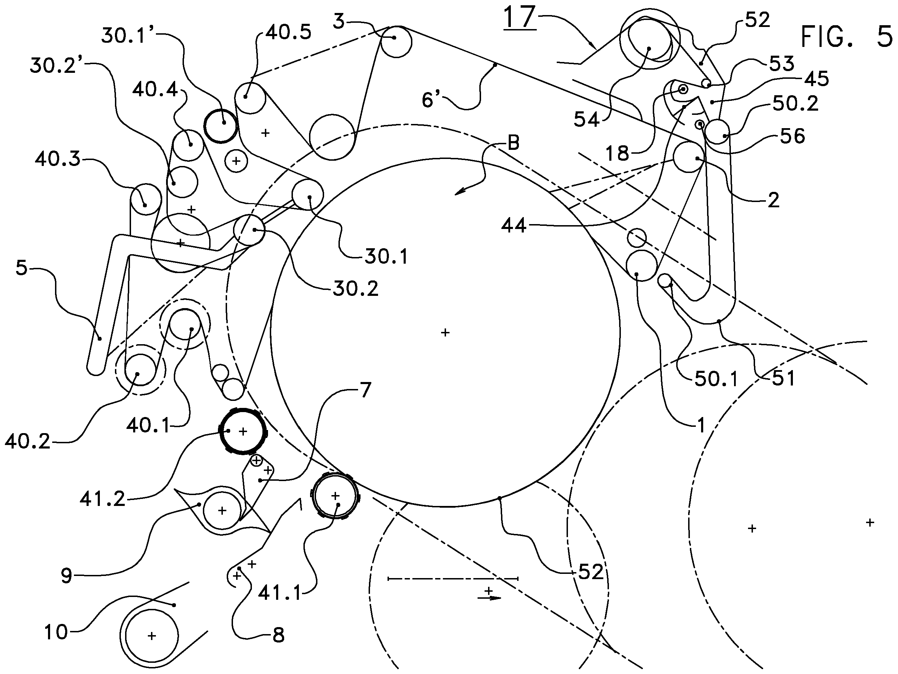

Fig. 3 shows the tailgate 11, 12, 13, 20 in the bale forming position, Fig. 4 in an intermediate position, and Fig. 5 in the bale ejecting position. In this embodiment not only the tailgate 11, 12, 13, 20 but also a part of the wrapping apparatus 17 is folded together. The embodiment of Fig. 3 to Fig. 5 show how a foldable web conveyor guides and preferably conveys a web 52 of wrapping material on its way from the supply reel 54 to the wrapping material inlet In which is positioned between the starter roller 41.1 and the deflecting roller 1.

This web conveyor comprises at least one endless web conveyor belt 51 which is guided around the two conveyor deflecting rollers 50.1, 50.2. The web conveyor belt 51 guides and preferably conveys the web 52 of wrapping material after the wrapping procedure has started and while the tailgate 11, 12, 13, 20 is still in the bale forming position. The web 52 is guided around a web deflecting roller 53 and is clamped between the web conveyor belt 51 and the pressing belts 6.

In one embodiment the conveyor deflecting rollers 50.1, 50.2 are idler rollers. The web conveyor belt 51 presses the web 52 against the or at least one pressing belt. The web 52 is only moved by the driven pressing belt. In a further embodiment at least one conveyor deflecting roller 50.1, 50.2 is driven.

In both embodiments the endless conveyor belt 51 of the web conveyor is rotated at least in the time period between starting the wrapping procedure and the event that a leading segment of the web 52 is clamped between the bale B and the or at least one pressing belt 6'. The web 52 is clamped between the web conveyor belt 51 and the outer surface of the endless pressing belt 6 before reaching the wrapping material inlet In. The web 52 is conveyed towards the inlet In and is guided around the deflecting roller 1 into the bale forming chamber Ch'.

The web conveyor 50.1, 50.2, 51 is not needed while the bale B is formed and is also not needed after the bale and the pressing belt(s) 6 have clamped the web 52 and is also not needed when the tailgate 11, 12, 13, 20 is in the bale ejecting position.

In one embodiment the web conveyor 50.1, 50.2, 51 has an own drive which can be switched on or off. Preferably this drive rotates the rear deflecting roller 50.2. In a further embodiment the web conveyor belt 51 is an idler belt which is driven by the pressing belt(s) 6. In both embodiments the web conveyor 50.1, 50.2, 51 can be pivoted between a conveying position and a parking position. Fig. 3 shows the web conveyor 50.1, 50.2, 51 in the conveying position and Fig. 4 and Fig. 5 show it in the parking position. The web conveyor belt 51 being in the conveying position is pressed against the pressing belt 6' and is rotated by the pressing belt 6' (Fig. 3). A distance between the pressing belt 6' and the web conveyor belt 51 being in the parking position (Fig. 4 and Fig. 5) occurs.

In one embodiment an actuator pivots the web conveyor, e.g. by moving a conveyor deflecting roller 50.1, 50.2. This actuator can further be used for moving the cutting edge or the anvil or a further moveable element of the severing device 18.

In a further embodiment a part of the web conveyor is mechanically connected with the severing device 18. Moving the severing device 18 against the web 52 causes the web conveyor to be moved into the parking position.

In the embodiment the adjacent conveyor deflecting roller 50.1 is mechanically connected with the holding member 11. As mentioned above, the connecting rod 20 transfers a pivotal movement of the carrying member 12 for the deflecting roller 2 onto the holding member 11 for the adjacent deflecting roller 1. The pivotal movement of the holding member 11 is further transferred onto the adjacent conveyor deflecting roller 50.1. Therefor not only the adjacent deflecting roller 1 but also the adjacent conveyor deflecting roller 50.1 is pivoted towards the deflecting roller 2 when the tailgate is pivoted into the bale ejecting position. As a consequence the conveyor deflecting roller 50.1 and thereby the web conveyor belt 51 are moved with respect to the carrying structure 12, 13. Therefore they do not form an obstacle for ejecting the bale B out of the bale forming chamber Ch'. Fig. 4 and Fig. 5 show that and how the web conveyor belt 51 and the conveyor deflecting roller 50.1 are pivoted away from the front housing together with the deflecting roller 1.

In one implementation the adjacent conveyor deflecting roller 50.1 is mechanically connected with the holding member 11 for the adjacent deflecting roller 1. A mechanical guiding device coupling member couples a movement of the holding member 11 from the bale ejecting position into the bale forming position with a movement of the adjacent roller 50.1 from the parking position into the conveying position.

In one implementation the further conveyor deflecting roller 50.2 is mechanically connected with the pivotal knife carrier 45. A mechanical guiding device coupling member belongs to the knife carrier 45 and couples a movement of the knife carrier 45 from the severing position into the parking position with a movement of the further roller 50.2 from the parking position into the conveying position.

In one implementation the further conveyor deflecting roller 50.2 is mechanically connected with a web feeding roller 56. This roller 56 is positioned between the supply reel 54 and the further conveyor deflecting roller 50.2 and guides the web 52. In one implementation the roller 56 conveys the web 52. The web feeding roller 56 can be moved between a feeding position and a parking position. The roller 56 in the feeding position conveys the web 52. A distance between the roller 56 being in the parking position and the web 52 occurs. A mechanical guiding device coupling member couples
- a movement of the web feeding roller 56 from the parking position into feeding position with
- a movement of the further conveyor deflecting roller 50.2 from the parking position into the conveying position.

Reference signs used in the claims will not limit the scope of the claimed invention. The term "comprises" does not exclude other elements or steps. The articles "a", "an", and "one" do not exclude a plurality of elements.

**LIST OF REFERENCE SIGNS**

| | |
|---|---|
| 1 | adjacent deflecting roller mounted at the holding member 11, guiding the or every pressing belt 6, forms one border of the wrapping material inlet In |
| 2, 3 | further deflecting rollers mounted at the pivotal carrying structure 12, 13, guides the or every pressing belt 6 |
| 4 | tailgate actuator, moves the carrying member 12, comprises two piston-cylinder devices |
| 5 | pivotal tensioning member in its lowermost position, carries the moveable rollers 30.1, 30.2 |
| 5' | pivotal tensioning member in its uppermost position |
| 6 | pressing belt when being guided around deflecting rollers 30.1, 30.2 being in the lowermost position and guided around further deflecting rollers |
| 6' | pressing belt when being guided around the deflecting rollers 30.1', 30.2' being in the uppermost position and guided around further deflecting rollers |
| 7 | stripping element, cleans the rigid tines of the conveyor rotor 9 |
| 8 | feeding channel bottom |
| 9 | conveyor rotor engaging from above into the feeding channel |
| 10 | pick-up unit |
| 11 | pivotal holding member for the pivotal deflecting roller 1, belongs to the adjacent discharge gate part |
| 12 | pivotal carrying member for the deflecting rollers 2, serves as a further holding member, belong to the pivotal carrying structure |
| 13 | pivotal carrying member for the deflecting rollers 3, serves as a further holding member, belong to the pivotal carrying structure |
| 14.1 | pivoting axis of the pivotal holding member 11 |
| 14.2 | joint pivoting axis of the pivotal carrying members 12, 13 |
| 15 | pivoting axis of the tensioning member 5 |
| 17 | wrapping apparatus, comprises the wrapping material guiding device 50.1, 50.2, 51 and the wrapping material reel 54 |
| 18 | pivoting axle for the knife carrier 45 |
| 20 | connecting member, belongs to the mechanical discharge gate coupling device connecting the pivotal holding member 11 with the pivotal carrying member 12, comprises two connecting rods |
| 30.1, 30.2 | moveable deflecting rollers mounted on the pivotal tensioning member 5 in their lowermost positions achieved when the tensioning member 5 is in its lowermost position |
| 30.1', 30.2' | moveable deflecting rollers mounted on the pivotal tensioning member 5' in their uppermost positions achieved when the tensioning member 5' is in its uppermost position |
| 40.1, 40.2, ... | stationary deflecting rollers mounted at the stationary casing part |
| 41.1, 41.2 | starter rollers mounted at the stationary casing part |
| 44 | knife for severing the web 52 of wrapping material |
| 45 | knife holder, carries the knife 44, can be pivoted around the axle 18, comprises a mechanical guiding device coupling member for the roller 50.2 |
| 50.1 | moveable conveyor deflecting roller for the web conveyor belt 51, connected with the holding member 11, serves as the adjacent wrapping material guiding member |
| 50.2 | further moveable conveyor deflecting roller for the web conveyor belt 51, connected with the carrying structure 12, 13, serves as the further wrapping material guiding part |
| 51 | web conveyor belt, guided around the rollers 50.1, 50.2 |
| 52 | web of wrapping material |
| 53 | web deflecting roller |
| 54 | reel for wrapping material |
| 56 | moveable web feeding roller |
| B | wrapped and ejected bale |
| Ch | small bale forming chamber in the beginning of the bale forming |
| Ch' | final bale forming chamber after the bale forming is finished |
| G | ground over which the baler is moved |
| In | wrapping material inlet into the bale forming chamber Ch, Ch' positioned between the shiftable deflecting roller 1 and the starter roller 41.1 |
| L.l | lower line of the required aperture for ejecting the bale B |
| L.u | upper line of the required aperture for ejecting the bale B |
| TD | traveling direction of the baler |

## Claims

1. Bale forming and wrapping apparatus comprising
- a bale forming means (5, 6, 41.1, 41.2) providing a bale forming chamber (Ch, Ch'),
- a casing, and
- a wrapping material guiding device (50.1, 50.2, 51),
wherein the casing comprises
- a discharge gate and
- a stationary casing part,
wherein the discharge gate is moveable with respect to the stationary casing part between
- a bale forming position and
- a bale ejecting position,
wherein the bale forming means (5, 6, 41.1, 41.2) is arranged to form a bale (B) in the provided bale forming chamber (Ch, Ch') while
- the stationary casing part and
- the discharge gate being in the bale forming position
together surround the bale forming chamber (Ch, Ch'),
wherein the wrapping material guiding device
- is mounted at the discharge gate and
- is arranged to guide a web (52) of wrapping material towards the bale forming chamber (Ch, Ch'),
wherein the bale forming and wrapping apparatus is arranged to inject the conveyed web (52) to the bale forming chamber while the discharge gate is in the bale forming position, and
wherein the bale forming and wrapping apparatus is arranged
- to wrap at least one surface of the bale (B) in the bale forming chamber (Ch, Ch') while the discharge gate is in the bale forming position and
- to eject the wrapped bale (B) out of the bale forming chamber (Ch, Ch') when the discharge gate is in the bale ejecting position,
the discharge gate comprises
- an adjacent discharge gate part (11) and
- a further discharge gate part (12, 13) and
the wrapping material guiding device comprises
- an adjacent wrapping material guiding member (50.1) and
- at least one further wrapping material guiding part (50.2),
wherein the adjacent discharge gate part (11)
- is positioned between the stationary casing part and the further discharge gate part (12, 13) at least when the discharge gate is in the bale forming position and
- is moveable with respect to the further discharge gate part (12, 13) away from the stationary casing part,
**characterized in that** the adjacent wrapping material guiding member (50.1)
- is mechanically connected with the adjacent discharge gate part (11) and
- is moveable with respect to the further wrapping material guiding part (50.2), and
**in that** the further wrapping material guiding part (50.2) is mounted at the further discharge gate part (12, 13).

2. Bale forming and wrapping apparatus according to claim 1,
**characterized in that**
the bale forming and wrapping apparatus is arranged to move the discharge gate into the bale ejecting position
- by moving the discharge gate and the wrapping material guiding device (50.1, 50.2, 51) away from the stationary casing part,
- by additionally moving the adjacent discharge gate part (11) with respect to the further discharge gate part (12, 13) away from the stationary casing part, and
- by additionally moving the adjacent wrapping material guiding member (50.1) with respect to the further wrapping material guiding part (50.2) away from the stationary casing part.

3. Bale forming and wrapping apparatus according to one of the preceding claims,
**characterized in that**
the bale forming and wrapping apparatus comprises a mechanical discharge gate coupling device (20),
wherein the discharge gate coupling device (20) is arranged to couple
- a movement of the further discharge gate part (12, 13) into the bale ejecting position with
- a movement of the adjacent discharge gate part (11) with respect to the further discharge gate part (12, 13) away from the stationary casing part.

4. Bale forming and wrapping apparatus according to one of the preceding claims,
**characterized in that**
at least one part (50.1, 50.2, 51) of the wrapping material guiding device (50.1, 50.2, 51) is moveable between
- a conveying position and
- a parking position,
wherein
- the or at least one moveable part (50.1, 50.2, 51) being in the conveying position and
- the bale forming means (5, 6, 41.1, 41.2)
are arranged to clamp and jointly convey a web (52) of wrapping material towards the bale forming chamber (Ch, Ch') and
wherein a distance between
- the wrapping material guiding device (50.1, 50.2, 51) with the or every moveable part (50.1, 50.2, 51) being in the parking position and
- the bale forming means (5, 6, 41.1, 41.2)
occurs.

5. Bale forming and wrapping apparatus according to claim 4,
**characterized in that**
the bale forming and wrapping apparatus comprises
- at least one moveable web processing member (44, 56),
- a web processing member actuator, and
- at least one mechanical guiding device coupling member (45),
wherein the web processing member actuator is arranged to move the web processing member (18, 44, 56) with respect to a web (52) of wrapping material between at least two different positions and
wherein the mechanical guiding device coupling member (45) couples
- a movement of the web processing member (44, 56) from one position into the other position with
- a movement of the or at least one moveable part (50.1, 50.2, 51) of the wrapping material guiding device (50.1, 50.2, 51) from the parking position into the conveying position.

6. Bale forming and wrapping apparatus according to claim 5,
**characterized in that**
the bale forming and wrapping apparatus comprises a severing device (18, 44, 45),
wherein the severing device (18, 44, 45)
- comprises the or one moveable web processing member (44) and
- is arranged to sever a web (52) of wrapping material
by a movement of the moveable web processing member (18, 44, 56) from a parking position into a severing position,
wherein the mechanical guiding device coupling member (45) is arranged to couple
- a movement of the moveable web processing member (18, 44, 56) from the parking position into the severing position with
- a movement of the or at least one moveable part (50.1, 50.2, 51) of the wrapping material guiding device (50.1, 50.2, 51) from the conveying position into the parking position.

7. Bale forming and wrapping apparatus according to claim 5 or claim 6,
**characterized in that**
the or at least one web processing member (56) is moveable
- from a feeding position
- into a parking position,
wherein the moveable web processing member (56) being in the feeding position is arranged to touch and convey a web (52) of wrapping material,
wherein the mechanical conveying member coupling member (45) is arranged to couple
- a movement of the web processing member (56) from the parking position into the feeding position with
- a movement of the or at least one moveable part (50.1) of the wrapping material guiding device from the parking position into the conveying position.

8. Bale forming and wrapping apparatus according to one of the claims 4 to 7,
**characterized in that**
the wrapping material guiding device comprises a mechanical guiding member coupling member,
wherein the mechanical guiding member coupling member is arranged to couple
- a movement of the discharge gate from the bale forming position into the bale ejection position
- with a movement of the or at least one moveable wrapping material guiding member (50.1) from the conveying position into the parking position.

9. Bale forming and wrapping apparatus according to one of the preceding claims,
**characterized in that**
the wrapping material guiding device comprises at least one conveyor belt (51), the adjacent wrapping material guiding member comprises an adjacent roller (50.1), and
the further wrapping material guiding part comprises a further roller (50.2),
wherein the or every conveyor belt (51) is guided
- around the adjacent roller (50.1) and
- around the further roller (50.2).

10. Bale forming and wrapping apparatus according to one of the preceding claims,
**characterized in that**
the wrapping material guiding device comprises
- at least one rotatable member (50.1, 50.2) and
- a drive for the or at least one rotatable member (50.1, 50.2),
wherein the or at least one rotatable member touches a web (52) of wrapping material and
wherein the drive is arranged to selectively rotate the rotatable member or to interrupt the rotation of the rotatable member.

11. Bale forming and wrapping apparatus according to one of the preceding claims,
**characterized in that**
the bale forming and wrapping apparatus comprises a reservoir holder which is mounted at the further discharge gate part (12, 13),
wherein the reservoir holder is arranged to rotatably hold a reservoir (54) of wrapping material and
wherein the wrapping material guiding device (50.1, 50.2, 51) is arranged to convey a web (52) of wrapping material pulled from the reservoir (54).

12. Method for forming and wrapping a bale (B)
by using a bale forming and wrapping apparatus comprising
- a bale forming means (5, 6, 41.1, 41.2) providing a bale forming chamber (Ch, Ch'),
- a casing (11, 12, 13, 20), and
- a wrapping material guiding device (50.1, 50.2, 51),
wherein the casing comprises
- a discharge gate and
- a stationary casing part,
wherein the discharge gate is moveable with respect to the stationary casing part between
- a bale forming position and
- a bale ejecting position,
wherein the wrapping material guiding device (50.1, 50.2, 51) is mounted at the discharge gate and wherein
- the stationary casing part and
- the discharge gate being in a bale forming position
together surround the provided bale forming chamber (Ch, Ch'),
wherein the method comprises the steps that
the bale forming means forms the bale (B) in the bale forming chamber (Ch, Ch') while the discharge gate is in the bale forming position,
the wrapping material guiding device (50.1, 50.2, 51) guides a web (52) of wrapping material towards the bale forming chamber,
the conveyed web (52) of wrapping material is injected into the bale forming chamber (Ch, Ch') while the discharge gate is in the bale forming position,
at least one surface of the bale (B) in the bale forming chamber (Ch, Ch') is wrapped into the injected web (52) while the discharge gate is in the bale forming position,
the discharge gate is moved into the bale ejecting position, and
the wrapped bale (B) is ejected out of the bale forming chamber (Ch, Ch'), wherein
the discharge gate comprises
- an adjacent discharge gate part (11) and
- a further discharge gate part (12, 13) and
the wrapping material guiding device (50.1, 50.2, 51) comprises
- an adjacent wrapping material guiding member (50.1) and
- at least one further wrapping material guiding part (50.2),
wherein the adjacent discharge gate part (11) is positioned between the stationary casing part and the further discharge gate part (12, 13) when the discharge gate is in the bale forming position,
wherein the step that the discharge gate is moved into the bale ejecting position comprises the step that
- the discharge gate and the wrapping material guiding device (50.1, 50.2, 51) are moved away from the stationary casing part, and **characterised in that** it comprises the further steps that
- the adjacent discharge gate part (11) is moved with respect to the further discharge gate part (12, 13) away from the stationary casing part, and
- the adjacent wrapping material guiding member (50.1) is moved with respect to the further wrapping material guiding part (50.2) away from the stationary casing part.

13. Bale forming and wrapping method according to claim 12,
**characterized in that**
at least one part (50.1, 50.2, 51) of the wrapping material guiding device (50.1, 50.2, 51) is moveable between
- a conveying position and
- a parking position,
wherein the step that the wrapping material guiding device (50.1, 50.2, 51) conveys the web (52) towards the bale forming chamber (Ch, Ch') comprises the steps that
- the or at least one moveable part (51) being in the conveying position and
- the bale forming means (5, 6, 41.1, 41.2)
clamp and jointly convey the web (52) of wrapping material towards the bale forming chamber (Ch, Ch') and
the step that the discharge gate and the wrapping material guiding device (50.1, 50.2, 51) are moved away from the stationary casing part comprises the step that the or every moveable part (50.1, 50.2, 51) is moved into the parking position such that a distance between the wrapping material guiding device (50.1, 50.2, 51) and the bale forming means (5, 6, 41.1, 41.2) occurs.

## Patentansprüche

1. Vorrichtung zum Formen und Einwickeln von Ballen, mit:
- einem Ballenformmittel (5, 6, 41.1, 41.2), das eine Ballenformkammer (Ch, Ch') bereitstellt,
- einem Gehäuse, und
- einer Einwickelmaterial-Führungseinrichtung (50.1, 50.2, 51),
wobei das Gehäuse Folgendes aufweist:
- ein Austrittstor und
- einen ortsfesten Gehäuseteil,
wobei das Austrittstor relativ zu dem ortsfesten Gehäuseteil beweglich ist zwischen
- einer Ballenformposition und
- einer Ballenauswurfposition,
wobei das Ballenformmittel (5, 6, 41.1, 41.2) dazu angeordnet ist, einen Ballen (B) in der bereitgestellten Ballenformkammer (Ch, Ch') zu formen, während
- der ortsfesten Gehäuseteil und
- das sich in der Ballenformposition befindende Austrittstor
gemeinsam die Ballenformkammer (Ch, Ch') umgeben,
wobei die Einwickelmaterial-Führungseinrichtung
- an dem Austrittstor montiert ist und
- dazu angeordnet ist, eine Bahn (52) von Einwickelmaterial in Richtung auf die Ballenformkammer (Ch, Ch') zu führen,
wobei die Vorrichtung zum Formen und Einwickeln von Ballen dazu angeordnet ist, die geförderte Bahn (52) in die Ballenformkammer einzuführen, während sich das Austrittstor in der Ballenformposition befindet, und
wobei die Vorrichtung zum Formen und Einwickeln von Ballen dazu angeordnet ist,
- mindestens eine Oberfläche des Ballens (B) in der Ballenformkammer (Ch, Ch') einzuwickeln, während sich das Austrittstor in der Ballenformposition befindet, und
- den eingewickelten Ballen (B) aus der Ballenformkammer (Ch, Ch') auszuwerfen, wenn sich das Austrittstor in der Ballenauswurfposition befindet,
wobei das Austrittstor Folgendes aufweist:
- einen angrenzenden Austrittstorteil (11) und
- einen weiteren Austrittstorteil (12, 13) und
die Einwickelmaterial-Führungseinrichtung Folgendes aufweist:
- ein angrenzendes Einwickelmaterial-Führungsbauteil (50.1) und
- mindestens einen weiteren Einwickelmaterial-Führungsteil (50.2),
wobei der angrenzende Austrittstorteil (11)
- mindestens dann, wenn sich das Austrittstor in der Ballenformposition befindet, zwischen dem ortsfesten Gehäuseteil und dem weiteren Austrittstorteil (12, 13) angeordnet ist und
- relativ zu dem weiteren Austrittstorteil (12, 13) weg von dem ortsfesten Gehäuseteil beweglich ist,
**dadurch gekennzeichnet, dass** das angrenzende Einwickelmaterial-Führungsbauteil (50.1)
- mechanisch mit dem angrenzenden Austrittstorteil (11) verbunden ist und
- relativ zu dem weiteren Einwickelmaterial-Führungsteil (50.2) beweglich ist, und
dass der weitere Einwickelmaterial-Führungsteil (50.2) an dem weiteren Austrittstorteil (12, 13) montiert ist.

2. Vorrichtung zum Formen und Einwickeln von Ballen nach Anspruch 1, **dadurch gekennzeichnet, dass**
die Vorrichtung zum Formen und Einwickeln von Ballen dazu angeordnet ist, das Austrittstor in die Ballenauswurfposition zu bewegen,
- indem sie das Austrittstor und die Einwickelmaterial-Führungsvorrichtung (50.1, 50.2, 51) von dem ortsfesten Gehäuseteil weg bewegt,
- indem sie außerdem den angrenzenden Austrittstorteil (11) relativ zu dem weiteren Austrittstorteil (12, 13) weg von dem ortsfesten Gehäuseteil bewegt und
- indem sie zusätzlich das angrenzende Einwickelmaterial-Führungsbauteil (50.1) relativ zu dem weiteren Einwickelmaterial-Führungsteil (50.2) weg von dem ortsfesten Gehäuseteil bewegt.

3. Vorrichtung zum Formen und Einwickeln von Ballen nach mindestens einem der vorherigen Ansprüche, **dadurch gekennzeichnet, dass**
die Vorrichtung zum Formen und Einwickeln von Ballen eine mechanische Austrittstor-Kopplungseinrichtung (20) aufweist,
wobei die Austrittstor-Kopplungsvorrichtung (20) dazu angeordnet ist,
- eine Bewegung des weiteren Austrittstorteils (11, 13) in die Ballenauswurfposition mit
- einer Bewegung des angrenzenden Austrittstorteils (11) relativ zu dem weiteren Austrittstorteil (12, 13) weg von dem ortsfesten Gehäuseteil
zu koppeln.

4. Vorrichtung zum Formen und Einwickeln von Ballen nach mindestens einem der vorhergehenden Ansprüche, **dadurch gekennzeichnet, dass**
mindestens ein Teil (50.1, 50.2, 51) der Einwickelmaterial-Führungseinrichtung (50.1, 50.2, 51) zwischen
- einer Förderposition und
- einer Parkposition,
beweglich ist, wobei
- der sich in der Förderposition befindende bewegliche Teil (50.1, 50.2, 51) oder mindestens ein sich in der Förderposition befindender beweglicher Teil (50.1, 50.2, 51) und
- das Ballenformmittel (5, 6, 41.1, 41.2)
dazu angeordnet sind, eine Bahn (52) von Einwickelmaterial einzuklemmen und gemeinsam in Richtung auf die Ballenformkammer (Ch, Ch') zu fördern, und
wobei ein Abstand zwischen
- der Einwickelmaterial-Führungseinrichtung (50.1, 50.2, 51), wobei sich der oder jeder bewegliche Teil (50.1, 50.2, 51) in der Parkposition befindet, und
- dem Ballenformmittel (5, 6, 41.1, 41.2)
auftritt.

5. Vorrichtung zum Formen und Einwickeln von Ballen nach Anspruch 4, **dadurch gekennzeichnet, dass**
die Vorrichtung zum Formen und Einwickeln von Ballen Folgendes aufweist:
- mindestens ein bewegliches Bahnverarbeitungsbauteil (44, 56),
- einen Bahnverarbeitungsbauteil-Aktuator und
- mindestens ein mechanisches Führungseinrichtungs-Koppelbauteil (45),
wobei der Bahnverarbeitungsbauteil-Aktuator dazu angeordnet ist, das Bahnverarbeitungsbauteil (18, 44, 56) relativ zu einer Bahn (52) von Einwickelmaterial zwischen mindestens zwei verschiedenen Positionen zu bewegen, und
wobei das mechanische Führungsvorrichtungs-Koppelbauteil (45)
- eine Bewegung des Bahnverarbeitungsbauteils (44, 56) von einer Position in die andere Position mit
- einer Bewegung des einen oder mindestens eines beweglichen Teils (50.1, 50.2, 51) der Einwickelmaterial-Führungseinrichtung (50.1, 50.2, 51) von der Parkposition in die Förderposition
koppelt.

6. Vorrichtung zum Formen und Einwickeln von Ballen nach Anspruch 5, **dadurch gekennzeichnet, dass**
die Vorrichtung zum Formen und Einwickeln von Ballen eine Trenneinrichtung (18, 44, 45) aufweist,
wobei die Trenneinrichtung (18, 44, 45)
- das bewegliche oder mindestens ein bewegliches Bahnverarbeitungsbauteil (44) aufweist und
- dazu angeordnet ist, eine Bahn (52) von Einwickelmaterial zu trennen durch eine Bewegung des beweglichen Bahnverarbeitungsbauteils (18, 44, 56) von einer Parkposition in eine Trennposition,
wobei das mechanische Führungseinrichtungs-Koppelbauteil (45) dazu angeordnet ist,
- eine Bewegung des beweglichen Bahnverarbeitungsbauteils (18, 44, 56) von der Parkposition in die Trennposition mit
- einer Bewegung des oder mindestens eines beweglichen Teils (50.1, 50.2, 51) der Einwickelmaterial-Führungseinrichtung (50.1, 50.2, 51) von der Förderposition in die Parkposition
zu koppeln.

7. Vorrichtung zum Formen und Einwickeln von Ballen nach Anspruch 5 oder Anspruch 6,
**dadurch gekennzeichnet, dass**
das oder mindestens ein Bahnverarbeitungsbauteil (56)
- von einer Zuführposition
- in eine Parkposition,
beweglich ist, wobei das bewegliche Bahnverarbeitungsbauteil (56), das sich in der Zuführposition befindet, dazu angeordnet ist eine Bahn (52) von Einwickelmaterial zu berühren und zu fördern,
wobei das mechanische Förderbauteil-Koppelbauteil (45) dazu angeordnet ist,
- eine Bewegung des Bahnverarbeitungsbauteil (56) von der Parkposition in die Zuführposition mit
- einer Bewegung des oder mindestens eines beweglichen Teils (50.1) der Einwickelmaterial-Führungseinrichtung von der Parkposition in die Förderposition
zu koppeln.

8. Vorrichtung zum Formen und Einwickeln von Ballen nach mindestens einem der Ansprüche 4 bis 7, **dadurch gekennzeichnet, dass**
die Einwickelmaterial-Führungseinrichtung ein mechanisches Führungsbauteil-Koppelbauteil aufweist,
wobei das mechanische Führungsbauteil-Koppelbauteil dazu angeordnet ist,
- eine Bewegung des Austrittstors von der Ballenformposition in die Ballenauswurfposition
- mit einer Bewegung des oder mindestens eines beweglichen Einwickelmaterial-Führungsbauteils (50.1) von der Förderposition in die Parkposition
zu koppeln.

9. Vorrichtung zum Formen und Einwickeln von Ballen nach mindestens einem der vorhergehenden Ansprüche, **dadurch gekennzeichnet, dass**
die Einwickelmaterial-Führungseinrichtung mindestens ein Förderband (51) aufweist,
das angrenzende Einwickelmaterial-Führungsbauteil eine angrenzende Rolle (50.1) aufweist und der weitere Einwickelmaterial-Führungsteil eine weitere Rolle (50.2) aufweist,
wobei das oder jedes Förderband (51)
- um die angrenzende Rolle (50.1) herum und
- um die weitere Rolle (50.2) herum
geführt ist.

10. Vorrichtung zum Formen und Einwickeln von Ballen nach mindestens einem der vorhergehenden Ansprüche, **dadurch gekennzeichnet, dass**
die Einwickelmaterial-Führungseinrichtung Folgendes aufweist:
- mindestens ein drehbares Bauteil (50.1, 50.2) und
- einen Antrieb für das drehbare Bauteil (50.1, 50.2) oder mindestens ein drehbares Bauteil (50.1, 50.2),
wobei das drehbare Bauteil oder mindestens ein drehbares Bauteil eine Bahn (52) von Einwickelmaterial berührt und
wobei der Antrieb dazu angeordnet ist, wahlweise das drehbare Bauteil zu drehen oder die Drehung des drehbaren Bauteils zu unterbrechen.

11. Vorrichtung zum Formen und Einwickeln von Ballen nach mindestens einem der vorhergehenden Ansprüche, **dadurch gekennzeichnet, dass**
die Vorrichtung zum Formen und Einwickeln von Ballen einen Vorratshalter aufweist, der an dem weiteren Austrittstorteil (12, 13) montiert ist,
wobei der Vorratshalter dazu angeordnet ist, einen Vorrat (54) von Einwickelmaterial drehbar zu halten und
wobei die Einwickelmaterial-Führungseinrichtung (50.1, 50.2, 51) dazu angeordnet ist, eine aus dem Vorrat (54) gezogene Bahn (52) von Einwickelmaterial zu fördern.

12. Verfahren zum Formen und Einwickeln eines Ballens (B)
unter Verwendung einer Vorrichtung zum Formen und Einwickeln von Ballen, mit:
- einem Ballenformmittel (5, 6, 41.1, 41.2), das eine Ballenformkammer (Ch, Ch') bereitstellt,
- einem Gehäuse (11, 12, 13, 20), und
- einer Einwickelmaterial-Führungseinrichtung (50.1, 50.2, 51),
wobei das Gehäuse Folgendes aufweist:
- ein Austrittstor und
- einen ortsfesten Gehäuseteil,
wobei das Austrittstor relativ zu dem ortsfesten Gehäuseteil beweglich ist zwischen
- einer Ballenformposition und
- einer Ballenauswurfposition,
wobei die Einwickelmaterial-Führungseinrichtung (50.1, 50.2, 51) an dem Austrittstor montiert ist und wobei
- der ortsfeste Gehäuseteil und
- das sich in einer Ballenformposition befindende Austrittstor
gemeinsam die bereitgestellte Ballenformkammer (Ch, Ch') umgeben,
wobei das Verfahren die folgenden Schritte aufweist:
das Ballenformmittel formt den Ballen (B) in der Ballenformkammer (Ch, Ch'), während sich das Austrittstor in der Ballenformposition befindet,
die Einwickelmaterial-Führungseinrichtung (50.1, 50.2, 51) führt eine Bahn (52) von Einwickelmaterial in Richtung auf die Ballenformkammer,
die geförderte Bahn (52) von Einwickelmaterial wird in die Ballenformkammer (Ch, Ch') eingeführt, während sich das Austrittstor in der Ballenformposition befindet,
mindestens eine Oberfläche des Ballens (B) in der Ballenformkammer (Ch, Ch') wird in die eingeführte Bahn (52) eingewickelt, während sich das Austrittstor in der Ballenformposition befindet,
das Austrittstor wird in die Ballenauswurfposition bewegt und
der eingewickelte Ballen (B) wird aus der Ballenformkammer (Ch, Ch') ausgeworfen,
wobei
das Austrittstor Folgendes aufweist:
- einen angrenzenden Austrittstorteil (11) und
- einen weiteren Austrittstorteil (12, 13) und
die Einwickelmaterial-Führungseinrichtung (50.1, 50.2, 51) Folgendes aufweist:
- ein angrenzendes Einwickelmaterial-Führungsbauteil (50.1) und
- mindestens einen weiteren Einwickelmaterial-Führungsteil (50.2),
wobei der angrenzende Austrittstorteil (11) zwischen dem ortsfesten Gehäuseteil und dem weiteren Austrittstorteil (12, 13) angeordnet ist, wenn sich das Austrittstor in der Ballenformposition befindet,
wobei der Schritt, dass das Austrittstor in die Ballenauswurfposition bewegt wird, den Schritt aufweist, dass
- das Austrittstor und die Einwickelmaterial-Führungseinrichtung (50.1, 50.2, 51) von dem ortsfesten Gehäuseteil weg bewegt werden, und **gekennzeichnet durch** die weiteren Schritte, dass
- der angrenzende Austrittstorteil (11) relativ zu dem weiteren Austrittstorteil (12, 13) von dem ortsfesten Gehäuseteil weg bewegt wird und
- das angrenzende Einwickelmaterial-Führungsbauteil (50.1) relativ zu dem weiteren Einwickelmaterial-Führungsteil (50.2) von dem ortsfesten Gehäuseteil weg bewegt wird.

13. Verfahren zum Formen und Einwickeln eines Ballens nach Anspruch 12, **dadurch gekennzeichnet, dass**
mindestens ein Teil (50.1, 50.2, 51) der Einwickelmaterial-Führungseinrichtung (50.1, 50.2, 51) zwischen
- einer Förderposition und
- einer Parkposition
beweglich ist, wobei der Schritt, dass die Einwickelmaterial-Führungseinrichtung (50.1, 50.2, 51) die Bahn (52) in Richtung auf die Ballenformkammer (Ch, Ch') fördert, die Schritte aufweist, dass
- der sich in der Förderposition befindende bewegliche Teil (51) oder mindestens ein sich in der Förderposition befindender beweglicher Teil (51) und
- das Ballenformmittel (5, 6, 41.1, 41.2)
die Bahn (52) von Einwickelmaterial einklemmen und gemeinsam in Richtung auf die Ballenformkammer (Ch, Ch') fördern und
der Schritt, dass das Austrittstor und die Einwickelmaterial-Führungseinrichtung (50.1, 50.2, 51) von dem ortsfesten Gehäuseteil weg bewegt werden, den Schritt aufweist, dass der oder jede bewegliche Teil (50.1, 50.2, 51) in die Parkposition bewegt wird,
sodass ein Abstand zwischen der Einwickelmaterial-Führungseinrichtung (50.1, 50.2, 51) und dem Ballenformmittel (5, 6, 41.1, 41.2) auftritt.

## Revendications

1. Dispositif de formation et d'emballage de balle comprenant :
un moyen de formation de balle (5, 6, 41.1, 41.2) comportant un compartiment de formation de balle (Ch, Ch'),
une enveloppe, et
un dispositif de guidage de matériau d'emballage (50.1, 50.2, 51),
dans lequel l'enveloppe comprend
une porte de déchargement et
une partie d'enveloppe fixe,
dans lequel la porte de déchargement peut être déplacée par rapport à la partie d'enveloppe fixe entre :
une position de formation de balle et
une position d'éjection de balle,
dans lequel le moyen de formation de balle (5, 6, 41.1, 41.2) est agencé afin de former une balle (B) dans le compartiment de formation de balle (Ch, Ch') prévu pendant que
la partie d'enveloppe fixe et
la porte de déchargement, lorsqu'elle est dans la position de formation de balle entourent ensemble le compartiment de formation de balle (Ch, Ch'),
dans lequel le dispositif de guidage de matériau d'emballage est monté au niveau de la porte de déchargement et
est chargé afin de guider une bande (52) de matériau d'emballage vers le compartiment de formation de balle (Ch, Ch'),
dans lequel le dispositif de formation et d'emballage de balle est agencé afin d'injecter la bande (52) transportée vers le compartiment de formation de balle alors que la porte de déchargement est dans la position de formation de balle, et
dans lequel le dispositif de formation et d'emballage de balle est agencé
afin d'envelopper au moins une surface de la balle (B) dans le compartiment de formation de balle (Ch, Ch') alors que la porte de déchargement est dans la position de formation de balle et
d'éjecter la balle (B) enveloppée du compartiment de formation de balle (Ch, Ch') alors que la porte de déchargement est dans la position d'éjection de balle,
la porte de déchargement comprend
une partie de porte de déchargement adjacente (11) et
une autre partie de porte de déchargement (12, 13) et
le dispositif de guidage de matériau d'emballage comprend
un élément de guidage adjacent de matériau d'emballage (50.1) et
au moins une autre partie de guidage de matériau d'emballage (50.2),
dans lequel la partie de porte de déchargement adjacente (11)
est positionnée entre la partie d'enveloppe fixe et l'autre partie de porte de déchargement (12, 13) au moins alors que la porte de déchargement est dans la position de formation de balle et
peut être déplacée par rapport à l'autre partie de porte de déchargement (12, 13) à l'écart de la partie d'enveloppe fixe,
**caractérisé en ce que** l'élément de guidage adjacent de matériau d'emballage (50.1)
est relié mécaniquement à la partie de porte de déchargement adjacente (11) et
peut être déplacé par rapport à l'autre partie de guidage de matériau d'emballage (50.2), et
**en ce que** l'autre partie de guidage de matériau d'emballage (50.2) est montée au niveau de l'autre partie de porte de déchargement (12, 13).

2. Dispositif de formation et d'emballage de balle selon la revendication 1,
**caractérisé en ce que**
le dispositif de formation et d'emballage de balle est agencé afin de déplacer la porte de déchargement dans la position d'éjection de balle
en déplaçant la porte de déchargement et le dispositif de guidage de matériau d'emballage (50.1, 50.2, 51) à l'écart de la partie d'enveloppe fixe,
en déplaçant, en outre, la partie de porte de déchargement adjacente (11) par rapport à l'autre partie de porte de déchargement (12, 13) à l'écart de la partie d'enveloppe fixe, et
en déplaçant, en outre, l'élément de guidage adjacent de matériau d'emballage (50.1) par rapport à l'autre partie de guidage de matériau d'emballage (50.2) à l'écart de la partie d'enveloppe fixe.

3. Dispositif de formation et d'emballage de balle selon l'une des revendications précédentes,
**caractérisé en ce que**
le dispositif de formation et d'emballage de balle comprend un dispositif de couplage de porte de déchargement mécanique (20),
dans lequel le dispositif de couplage de porte de déchargement (20) est agencé de manière à coupler :
un mouvement de l'autre partie de porte de déchargement (12, 13) dans la position d'éjection de balle avec
un mouvement de la partie de porte de déchargement adjacente (11) par rapport à l'autre partie de porte de déchargement (12, 13) à l'écart de la partie d'enveloppe fixe.

4. Dispositif de formation et d'emballage de balle selon l'une des revendications précédentes,
**caractérisé en ce que**
au moins une partie (50.1, 50.2, 51) du dispositif de guidage de matériau d'emballage (50.1, 50.2, 51) peut être déplacée entre
une position de transport et
une position de stationnement,
dans lequel
la ou au moins une partie mobile (50.1, 50.2, 51) étant dans la position de transport et
le moyen de formation de balle (5, 6, 41.1, 41.2)
sont agencés afin de maintenir et transporter conjointement une bande (52) de matériau d'emballage vers le compartiment de formation de balle (Ch, Ch') et
dans lequel un espace entre
le dispositif de guidage de matériau d'emballage (50.1, 50.2, 51), la ou chaque partie mobile (50.1, 50.2, 51) étant dans la position de stationnement, et
le moyen de formation de balle (5, 6, 41.1, 41.2) est créé.

5. Dispositif de formation et d'emballage de balle selon la revendication 4,
**caractérisé en ce que**
le dispositif de formation et d'emballage de balle comprend
au moins un élément de traitement de bande mobile (44, 56),
un actionneur d'élément de traitement de bande, et
au moins un élément de couplage de dispositif de guidage mécanique (45),
dans lequel l'actionneur d'élément de traitement de bande est agencé afin de déplacer l'élément de traitement de bande (18, 44, 56) par rapport à une bande (52) de matériau d'emballage entre au moins deux positions différentes et
dans lequel l'élément de couplage de dispositif de guidage mécanique (45) couple :
un mouvement de l'élément de transformation de bande (44, 56) à partir d'une position vers l'autre position avec
un mouvement de la ou la au moins une partie mobile (50.1, 50.2, 51) du dispositif de guidage de matériau d'emballage (50.1, 50.2, 51) à partir de la position de stationnement vers la position de transport.

6. Dispositif de formation et d'emballage de balle selon la revendication 5,
**caractérisé en ce que**
le dispositif de formation et d'emballage de balle comprend un dispositif de découpe (18, 44, 45),
dans lequel le dispositif de découpe (18, 44, 45)
comprend le ou un élément de traitement de bande mobile (44) et
est agencé afin de découper une bande (52) de matériau d'emballage
par un mouvement de l'élément de traitement de bande mobile (18, 44, 56) à partir d'une position de stationnement vers une position de découpe,
dans lequel l'élément de couplage de dispositif de guidage mécanique (45) est agencé afin de coupler
un mouvement de l'élément de traitement de bande mobile (18, 44, 56) à partir de la position de stationnement vers la position de découpe avec
un mouvement de la ou la au moins une partie mobile (50.1, 50.2, 51) du dispositif de guidage de matériau d'emballage (50.1, 50.2, 51) à partir de la position de transport vers la position de stationnement.

7. Dispositif de formation et d'emballage de balle selon la revendication 5 ou 6,
**caractérisé en ce que**
le ou au moins un élément de traitement de bande (56) peut être déplacé
à partir d'une position d'alimentation
vers une position de stationnement,
dans lequel l'élément de traitement de bande mobile (56), lorsqu'il est dans la position d'alimentation,
est agencé afin de toucher et transporter une bande (52) de matériau d'emballage,
dans lequel l'élément de couplage de dispositif de guidage mécanique (45) est agencé afin de coupler
un mouvement de l'élément de traitement de bande (56) à partir de la position de stationnement vers la position d'alimentation avec
un mouvement de la ou la au moins une partie mobile (50.1) du dispositif de guidage de matériau d'emballage à partir de la position de stationnement vers la position de transport.

8. Dispositif de formation et d'emballage de balle selon l'une des revendications 4 à 7,
**caractérisé en ce que**
le dispositif de guidage de matériau d'emballage comprend un élément de couplage d'élément de guidage mécanique,
dans lequel l'élément de couplage d'élément de guidage mécanique est agencé afin de coupler
un mouvement de la porte de déchargement à partir de la position de formation de balle vers la position d'éjection de balle
avec un mouvement du ou d'au moins un élément de guidage de matériau d'emballage mobile (50.1) à partir de la position de transport vers la position de stationnement.

9. Dispositif de formation et d'emballage de balle selon l'une des revendications précédentes,
**caractérisé en ce que**
le dispositif de guidage de matériau d'emballage comprend au moins une bande de convoyeur (51),
l'élément de guidage de matériau d'emballage adjacent comprend un rouleau adjacent (50.1), et
l'autre partie de guidage de matériau d'emballage comprend un autre rouleau (50.2),
dans lequel la ou chaque bande de convoyeur (51) est guidée
autour du rouleau adjacent (50.1) et
autour de l'autre rouleau (50.2).

10. Dispositif de formation et d'emballage de balle selon l'une des revendications précédentes,
**caractérisé en ce que**
le dispositif de guidage de matériau d'emballage comprend
au moins un élément pouvant tourner (50.1, 50.2) et
un dispositif d'entraînement pour le ou au moins un élément pouvant tourner (50.1, 50.2),
dans lequel le ou au moins un élément pouvant tourner touche une bande (52) de matériau d'emballage et
dans lequel le dispositif d'entraînement est agencé afin, de manière sélective, de faire tourner l'élément pouvant tourner ou d'interrompre la rotation de l'élément pouvant tourner.

11. Dispositif de formation et d'emballage de balle selon l'une des revendications précédentes,
**caractérisé en ce que**
le dispositif de formation et d'emballage de balle comprend un support de réservoir qui est monté au niveau de l'autre partie de porte de déchargement (12, 13),
dans lequel le support de réservoir est agencé afin de maintenir avec liberté de rotation un réservoir (54) de matériau d'emballage, et
dans lequel le dispositif de guidage de matériau d'emballage (50.1, 50.2, 51) est agencé afin de transporter une bande (52) de matériau d'emballage extraite du réservoir (54).

12. Procédé de formation et d'emballage de balle (B) en utilisant un dispositif de formation et d'emballage de balle, comprenant :
un moyen de formation de balle (5, 6, 41.1, 41.2) comportant un compartiment de formation de balle (Ch, Ch'),
une enveloppe (11, 12, 13, 20), et
un dispositif de guidage de matériau d'emballage (50.1, 50.2, 51),
dans lequel l'enveloppe comprend
une porte de déchargement et
une partie d'enveloppe fixe,
dans lequel la porte de déchargement peut être déplacée par rapport à la partie d'enveloppe fixe entre
une position de formation de balle et
une position d'éjection de balle,
dans lequel le dispositif de guidage de matériau d'emballage (50.1, 50.2, 51) est monté au niveau de la porte de déchargement et dans lequel
la partie d'enveloppe fixe et
la porte de déchargement, lorsqu'elle est dans une position de formation de balle entourent ensemble le compartiment de formation de balle (Ch, Ch') prévu,
dans lequel le procédé comprend les étapes dans lesquelles
le moyen de formation de balle forme la balle (B) dans le compartiment de formation de balle (Ch, Ch')
alors que la porte de déchargement est dans la position de formation de balle,
le dispositif de guidage de matériau d'emballage (50.1, 50.2, 51) guide une bande (52) de matériau d'emballage vers le compartiment de formation de balle,
la bande (52) de matériau d'emballage transportée est injectée dans le compartiment de formation de balle (Ch, Ch') alors que la porte de déchargement est dans la position de formation de balle,
au moins une surface de la balle (B) dans le compartiment de formation de balle (Ch, Ch') est enveloppée dans la bande (52) injectée alors que la porte de déchargement est dans la position de formation de balle,
la porte de déchargement est déplacée dans la position d'éjection de balle, et
la balle (B) enveloppée est éjectée du compartiment de formation de balle (Ch, Ch'),
dans lequel
la porte de déchargement comprend
une partie de porte de déchargement adjacente (11) et
une autre partie de porte de déchargement (12, 13) et
le dispositif de guidage de matériau d'emballage (50.1, 50.2, 51) comprend un élément de guidage adjacent de matériau d'emballage (50.1) et
au moins une autre partie de guidage de matériau d'emballage (50.2),
dans lequel la partie de porte de déchargement adjacente (11) est positionnée entre la partie d'enveloppe fixe et l'autre partie de porte de déchargement (12, 13) alors que la porte de déchargement est dans la position de formation de balle,
dans lequel l'étape dans laquelle la porte de déchargement est entrée dans la position d'éjection de balle comprend l'étape dans laquelle
la porte de déchargement et le dispositif de guidage de matériau d'emballage (50.1, 50.2, 51) sont écartés de la partie d'enveloppe fixe, et **caractérisé en ce qu'**il comprend les étapes supplémentaires dans lesquelles
la partie de porte de déchargement adjacente (11) est déplacée par rapport à l'autre partie de porte de déchargement (12, 13) à l'écart de la partie d'enveloppe fixe, et
l'élément de guidage adjacent de matériau d'emballage (50.1) est déplacé par rapport à l'autre partie de guidage de matériau d'emballage (50.2) à l'écart de la partie d'enveloppe fixe.

13. Procédé de formation et d'emballage de balle selon la revendication 12,
**caractérisé en ce que**
au moins une partie (50.1, 50.2, 51) du dispositif de guidage de matériau d'emballage (50.1, 50.2, 51) peut être déplacée entre
une position de transport et
une position de stationnement,
dans lequel l'étape dans laquelle le dispositif de guidage de matériau d'emballage (50.1, 50.2, 51) transporte la bande (52) vers le compartiment de formation de balle (Ch, Ch') comprend les étapes dans lesquelles
la ou au moins une partie mobile (51), lorsqu'elle est dans la position de transport et
le moyen de formation de balle (5, 6, 41.1, 41.2)
bloquent et transportent conjointement la bande (52) de matériau d'emballage vers le compartiment de formation de balle (Ch, Ch') et
l'étape dans laquelle la porte de déchargement et le dispositif de guidage de matériau d'emballage (50.1, 50.2, 51) sont écartés de la partie d'enveloppe fixe comprend l'étape dans laquelle la ou chaque partie mobile (50.1, 50.2, 51) est déplacée vers la position de stationnement de telle sorte qu'un espace entre le dispositif de guidage de matériau d'emballage (50.1, 50.2, 51) et le moyen de formation de balle (5, 6, 41.1, 41.2) est créé.
